(19) Europäisches Patentamt
European Patent Office
Office européen des brevets

(11) EP 0 738 738 B1

(12) # EUROPEAN PATENT SPECIFICATION

(45) Date of publication and mention of the grant of the patent:
**14.09.2005 Bulletin 2005/37**

(21) Application number: **94918530.0**

(22) Date of filing: **16.06.1994**

(51) Int Cl.[7]: **C08F 232/04**, C08F 232/06, C08F 236/04, C08F 212/06, C08F 210/00, C08F 4/42, C08F 4/48, C08F 8/04

(86) International application number:
**PCT/JP1994/000973**

(87) International publication number:
**WO 1994/029359 (22.12.1994 Gazette 1994/28)**

(54) **POLYMER CONTAINING SATURATED CYCLIC MOLECULAR STRUCTURE UNITS**

POLYMERE, DIE GESÄTTIGTE ZYKLISCHE MOLEKULARSTRUKTUREINHEITEN ENTHALTEN

POLYMERE CONTENANT DES UNITES STRUCTURALES MOLECULAIRES CYCLIQUES SATUREES

(84) Designated Contracting States:
**DE FR GB**

(30) Priority: **16.06.1993 JP 16834193**

(43) Date of publication of application:
**23.10.1996 Bulletin 1996/43**

(73) Proprietor: **Asahi Kasei Kabushiki Kaisha**
**Osaka (JP)**

(72) Inventor: **NATORI, Itaru**
**Kurashiki-shi, Okayama 710 (JP)**

(74) Representative: **Blake, John Henry Francis et al**
**Brookes Batchellor LLP**
**102-108 Clerkenwell Road**
**London EC1M 5SA (GB)**

(56) References cited:
**FR-A- 1 425 276**
**JP-A- 5 009 223**
**JP-A- 5 132 523**
**JP-A- 55 110 108**
**JP-A- 63 020 310**
**JP-A- 63 230 707**
**US-A- 3 328 372**
**US-A- 4 020 251**
**US-A- 4 138 536**

- **DATABASE WPI Section Ch, Week 8320 Derwent Publications Ltd., London, GB; Class A12, AN 83-48463K & SU-A-216 948 ( EROFEEV B Y) , 7 November 1982**

Remarks:
The file contains technical information submitted after the application was filed and not included in this specification

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

Background of the Invention

Technical field

The present invention relates to a polymer containing a saturated six-membered cyclic molecular unit and a method for producing the same. More particularly, the present invention is concerned with a polymer comprising at least one type of saturated six-membered cyclic molecular unit, or comprising at least one type of saturated six-membered cyclic molecular unit and a monomer unit derived from at least one type of monomer other than the monomer producing the saturated six-membered cyclic molecular unit, which other monomer is copolymerizable with the monomer producing the saturated six-membered cyclic molecular unit, and wherein the polymer containing a saturated six-membered cyclic molecular unit has a high number average molecular weight, so that it has not only excellent thermal properties in respect of, for example, a melting temperature, a glass transition temperature and a heat distortion temperature, but also excellent mechanical properties, such as high tensile modulus and high flexural modulus, and is also concerned with a method for producing such an excellent polymer containing a saturated six-membered cyclic molecular unit. Such a polymer of the present invention can be obtained by polymerizing or copolymerizing at least one six-membered cyclic conjugated diene monomer, or at least one six-membered cyclic conjugated diene monomer and at least one comonomer copolymerizable therewith in the presence of a catalyst comprised of a mononuclear, binuclear or multinuclear complex of an organometallic compound containing a metal belonging to Group IA of the Periodic Table with a complexing agent, to thereby obtain a six-membered cyclic conjugated diene polymer, and subjecting the obtained six-membered cyclic conjugated diene polymer to an addition reaction, wherein the addition reaction is performed at a carbon-to-carbon double bond of the six-membered cyclic conjugated diene monomer unit, to thereby convert the six-membered cyclic conjugated diene monomer unit to a saturated six-membered cyclic molecular unit.

Prior Art

In recent years, polymer chemistry has continuously made progress through various innovations in order to meet commercial demands which have been increasingly diversified. Especially, in the field of polymer materials to be used as commercially important materials, extensive and intensive studies have been made toward developing polymers having more excellent thermal and mechanical properties. Various proposals have been made with respect to such polymers and methods for the production thereof.

For example, various proposals have been made with respect to conjugated diene polymers. Some of the conjugated diene polymers produced by the techniques of such proposals have been widely used as commercially important materials.

Representative examples of known conjugated diene polymers include homopolymers, such as a polybutadiene and a polyisoprene; copolymers of block, graft, taper and random configurations, such as a butadiene-isoprene copolymer, a styrene-butadiene copolymer, a propylene-butadiene copolymer, a styrene-isoprene copolymer, an α-methylstyrene-butadiene copolymer, an α-methylstyrene-isoprene copolymer, an acrylonitrile-butadiene copolymer, an acrylonitrile-isoprene copolymer, a butadiene-methyl methacrylate copolymer; and hydrogenated polymers derived therefrom. These polymers have been used for various purposes in various fields. For example, these conventional polymers have been used as plastics; elastomers; materials for parts for machines, tires and belts; insulating materials; adhesives; and modifiers for other resins.

On the other hand, various proposals have been made with respect to methods for producing a conjugated diene polymer, which are also very important from a commercial point of view.

Particularly, various studies have been made with a view toward developing a polymerization catalyst capable of providing conjugated diene polymers having a high cis-1,4-bond content, for the purpose of obtaining conjugated diene polymers having thermal and mechanical properties.

For example, a catalyst system comprised mainly of a compound of an alkali metal, such as lithium or sodium, and a composite catalyst system comprised mainly of a compound of a transition metal, such as nickel, cobalt or titanium, have been proposed. Some of these catalyst systems have already been employed for a commercial scale practice of polymerization of butadiene and isoprene (see, for example, End. Ing. Chem., 48, 784 (1956) and Examined Japanese Patent Application Publication No. 37-8198).

On the other hand, for achieving a further increased cis-1,4-bond content and an excellent polymerization activity, a number of studies have been made toward developing a composite catalyst system comprised of a rare earth metal compound and an organometallic compound containing a metal belonging to Group I, II or III of the Periodic Table. Further, in connection with the study of such a catalyst system, intensive studies have also been made with

respect to highly stereospecific polymerization [see, for example, J. Polym. Sci., Polym. Chem. Ed., 18, 3345 (1980); Sci, Sinica., 2/3, 734 (1980); Makromol. Chem. Suppl, 4, 61 (1981); Unexamined German Patent Application Publication No. 2,848,964; Rubber Chem. Technol., 58, 117 (1985)].

Among these composite catalyst systems, a composite catalyst comprised mainly of a neodymium compound and an organoaluminum compound has been confirmed to have not only the ability to provide a desired polymer having a high cis-1,4-bond content, but also exhibits an excellent polymerization activity. Accordingly, this type of composite catalyst has already been commercially used as a catalyst for the polymerization of butadiene [see, for example, Makromol. Chem., 94, 119 (1981); Macromolecules, 15, 230 (1982)].

However, in accordance with recent remarkable progress of the techniques in this field, there has been a strong demand for the development of polymer materials having further improved properties, particularly excellent thermal properties (such as melting temperature, glass transition temperature and heat distortion temperature) and excellent mechanical properties (such as tensile modulus and flexural modulus).

As one of the most practical means for meeting such a demand, it has been attempted to produce polymer materials having excellent thermal and mechanical properties by homopolymerizing or copolymerizing not only a monomer having a relatively small steric hindrance, e.g., butadiene or isoprene, but also a monomer having a large steric hindrance, e.g., a cyclic conjugated diene monomer and then subjecting the resultant polymer to hydrogenation to thereby form a saturated cyclic molecular unit in the main chain of the polymer.

With respect to the homopolymerization or copolymerization of a monomer having a relatively small steric hindrance, e.g., butadiene or isoprene, catalyst systems having a polymerization activity which is satisfactory to a certain extent have been successfully developed. However, a catalyst system which exhibits a satisfactory polymerization activity in the homopolymerization or copolymerization of monomers having a large steric hindrance, e.g., a six-membered cyclic conjugated diene monomer, has not yet been developed.

That is, by conventional techniques, even homopolymerization of a six-membered cyclic conjugated diene is difficult, so that a homopolymer having a desired high molecular weight cannot be obtained. Furthermore, an attempt to copolymerize a six-membered cyclic conjugated diene with a monomer other than the six-membered cyclic conjugated diene, for the purpose of obtaining a polymer having optimized thermal and mechanical properties in order to meet a wide variety of commercial needs, has been unsuccessful with the result that the products obtained are only oligomers having a low molecular weight.

Further, with respect to saturation of such six-membered cyclic conjugated diene polymers which are only oligomers having a low molecular weight, the conventional techniques, in which an insoluble solid catalyst is used for saturation, have serious problems. That is, even if, for the purpose of obtaining such polymer materials having excellent thermal and mechanical properties, it is attempted to form a saturated six-membered cyclic molecular unit in the polymer chain of a polymer containing an unsaturated six-membered cyclic molecular unit by hydrogenation using an insoluble solid catalyst, the rate of hydrogenation of a carbon-to-carbon double bond in the unsaturated six-membered cyclic molecular unit is very slow, so that it has been very difficult to introduce a saturated six-membered cyclic molecular unit into the polymer.

As is apparent from the above, in any of the conventional techniques, it has been impossible to obtain a polymer, containing a saturated six-membered cyclic molecular unit, which has satisfactory properties. Therefore, it has been strongly desired to develop a high molecular weight polymer; containing a saturated six-membered cyclic molecular unit, which can satisfy the commercial demand.

J. Am. Chem. Soc., 81, 448 (1959) discloses a cyclohexadiene homopolymer and a polymerization method therefor, which homopolymer is obtained by polymerizing 1,3-cyclohexadiene, using a composite catalyst comprised of titanium tetrachloride and triisobutylaluminum.

However, the polymerization method disclosed in this prior art document is disadvantageous in that the use of a large amount of the catalyst is necessary, and the polymerization reaction must be conducted for a prolonged period of time, and that the obtained polymer has only an extremely low molecular weight. Therefore, the polymer obtained by the technique of this prior art document is of no commercial value. Further, this prior art document has no teaching or suggestion about introduction of a saturated six-membered cyclic molecular unit into the polymer.

Further, J. Polym. Sci., Pt. A, 2,3277 (1964) discloses methods for producing a cyclohexadiene homopolymer, in which the polymerization of 1,3-cyclohexadiene is conducted by various polymerization methods, such as radical polymerization, cationic polymerization, anionic polymerization and coordination polymerization. In any of the methods disclosed in this prior art document, however, the polymers obtained have only an extremely low molecular weight. Therefore, the polymers obtained by the techniques of this prior art document are of no commercial value. Further, this prior art document has no teaching or suggestion about introduction of a saturated cyclic molecular unit into the polymers.

Unexamined British Patent Application Publication No. 1,042,625 discloses a method for producing a cyclohexadiene homopolymer, in which the polymerization of 1,3-cyclohexadiene is conducted using a large amount of an organolithium compound as a catalyst.

In the polymerization method disclosed in unexamined British Patent Application Publication No. 1,042,625, the catalyst must be used in an amount as large as 1 to 2 wt%, based on the total weight of the monomers. Therefore, this method is economically disadvantageous. Further, the polymer obtained by this method has only an extremely low molecular weight. Moreover, in this prior art document, there is no teaching or suggestion of obtaining a copolymer. Furthermore, the method of this prior art document has disadvantages in that the polymer obtained contains a large amount of catalyst residue, which is very difficult to remove from the polymer, so that the polymer obtained by this method is of no commercial value. Further, this prior art document has no teaching or suggestion about the introduction of a saturated cyclic molecular unit into the polymer.

J. Polym. Sci., Pt. A, 3, 1553 (1965) discloses a cyclohexadiene homopolymer, which is obtained by polymerizing 1,3-cyclohexadiene using an organolithium compound as a catalyst. In this prior art document, the polymerization reaction must be continued for a period as long as 5 weeks, however, the polymer obtained has a number average molecular weight of only 20,000 or less. Further, this prior art document has no teaching or suggestion about introduction of a saturated cyclic molecular unit into the polymer.

Polym. Prepr. (Amer. Chem. Soc., Div. Polym. Chem.) 12, 402 (1971) teaches that when the polymerization of 1,3-cyclohexadiene is conducted using an organolithium compound as a catalyst, the cyclohexadiene homopolymer is obtained. However, the number average molecular weight of the cyclohexadiene homopolymer obtained is only from 10,000 to 15,000. Further, this document teaches that the reason for such a small molecular weight resides in that, concurrently with the polymerization reaction, not only a transfer reaction, which is caused by the abstraction of a lithium cation present in the polymer terminal, but also a reaction of elimination of lithium hydride occurs. Further, this prior art document has no teaching or suggestion about introduction of a saturated cyclic molecular unit into the polymer.

Die Makromolekulare Chemie., 163, 13 (1973) discloses a cyclohexadiene homopolymer which is obtained by polymerizing 1,3-cyclohexadiene using a large amount of an organolithium compound as a catalyst.

However, the polymer obtained in this prior art document is an oligomer having a number average molecular weight of only 6,500.

This prior art document also discloses a hydrogenated cyclohexadiene homopolymer (polycyclohexene oligomer) which is obtained by hydrogenating a cyclohexadiene polymer by use of p-toluenesulfonylhydrazide in large excess relative to the amount of a carbon-to-carbon double bond of the polymer.

However, the hydrogenated polymer disclosed in this prior art document has only an extremely low molecular weight. The disclosed method for hydrogenation is economically disadvantageous because the hydrogenation of this method is a stoichiometric reaction, in which a large excess of the hydrogenating agent is required. Therefore, the disclosed method is of no commercial value. The polymer obtained by this method is also of no commercial value.

European Polymer J., 9, 895 (1973) discloses a copolymer which is obtained by copolymerizing 1,3-cyclohexadiene with butadiene and/or isoprene, using a $\pi$-allylnickel compound as a polymerization catalyst.

However, the polymer obtained in this prior art document is an oligomer having an extremely low molecular weight. Further, it has been reported that the polymer of this prior art document has a single glass transition temperature, which suggests that the polymer has a random copolymer structure. Further, this prior art document has no teaching or suggestion about the introduction of a saturated cyclic molecular unit into the polymer.

Kobunshi Ronbun-shu (Collection of theses concerning polymers), Vol. 34, No. 5, 333 (1977) discloses a method for synthesizing a copolymer of 1,3-cyclohexadiene and acrylonitrile using zinc chloride as a polymerization catalyst. However, the alternating copolymer obtained in this prior art document is an oligomer having an extremely low molecular weight. Further, this prior art document has no teaching or suggestion about the introduction of a saturated cyclic molecular unit into the copolymer.

J. Polym. Sci., Polym. Chem. Ed., 20, 901 (1982) discloses a cyclohexadiene homopolymer which is obtained by polymerizing 1,3-cyclohexadiene using an organosodium compound as a catalyst. In this prior art document, the organosodium compound used is sodium naphthalene, and a radical anion derived from the sodium naphthalene forms a dianion which functions as a polymerization initiation site.

This means that although the cyclohexadiene homopolymer reported in this document has an apparent number average molecular weight of 38,700, this homopolymer is actually only a combination of two polymeric molecular chains, each having a number average molecular weight of 19,350, which chains respectively extend from the polymerization initiation site in two different directions.

Further, in the polymerization method disclosed in this document, the polymerization reaction needs to be conducted at an extremely low temperature. Therefore, the technique of this prior art document is of no commercial value. Furthermore, this prior art document has no teaching or suggestion about the introduction of a saturated cyclic molecular unit into the homopolymer.

Makromol. Chem., 191, 2743 (1990) discloses a method for polymerizing 1,3-cyclohexadiene using a polystyryllithium as a polymerization initiator. In this prior art document, it is described that concurrently with the polymerization reaction, not only does a transfer reaction occur, which is caused by the abstraction of a lithium cation present in the polymer terminal, but also a reaction of elimination of lithium hydride vigorously occurs. Further, it is reported

that even though the polymerization is conducted using a polystyryllithium as a polymerization initiator, a styrene-cyclohexadiene block copolymer cannot be obtained at room temperature, but the product obtained is only a cyclohexadiene homopolymer.

Further, in this prior art document, it is reported that when the polymerization reaction is conducted at -10 °C, a styrene-cyclohexadiene block copolymer having a molecular weight of about 20,000 is obtained in extremely low yield, together with a cyclohexadiene homopolymer.

However, the content of cyclohexadiene blocks in the obtained copolymer is extremely low. Further, this prior art document has no teaching or suggestion about not only a block copolymer of cyclohexadiene with a chain conjugated diene monomer, but also a multiblock cyclohexadiene copolymer having an at least-tri-block configuration, or a radial block copolymer of cyclohexadiene. Further, this prior art document has no teaching or suggestion about introduction of a saturated cyclic molecular unit into the copolymer.

There is (EP-A-0700938) (EP Application 94915282 copending) which is directed to a polymer comprising at least one monomer unit derived from a six-membered cyclic conjugated diene monomer. However, this copending EP Application has no teaching or suggestion about introduction of a saturated six-membered cyclic molecular unit into the polymer.

Furthermore, US-A-4 020 251 and US-A-3 328 372 are noted as prior art references. However, US-A-4 020 251 discloses actual production of copolymers containing cyclohexadiene and cyclohexadiene homopolymers (and hydrogenation products thereof) by use of a complex of butyllithium with an ether (e.g., tetrahydrofuran, THF) as a catalyst, in which the resultant polymers have small number average molecular weights and large molecular weight distributions. US-A-3 328 372 does not disclose six-membered cyclic conjugated diene polymers (and hydrogenation products thereof) but cyclopentadiene polymers (and hydrogenation products thereof) only.

As can be easily understood from the above, in any of the conventional techniques, it has been impossible to obtain a homopolymer or a copolymer containing a saturated cyclic molecular unit, which has excellent properties so that it can be satisfactorily used as an industrial material. Needless to say, a production process for such a homopolymer or a copolymer containing a saturated cyclic molecular unit or a method for introducing a saturated cyclic molecular unit into such a homopolymer or a copolymer is not known.

SUMMARY OF THE INVENTION

In these situations, the present inventor has made extensive and intensive studies with a view toward developing a polymer comprising at least one type of saturated six-membered cyclic molecular unit, or comprising at least one type of saturated six-membered cyclic molecular unit and a monomer unit derived from at least one type of monomer other than the monomer producing the saturated six-membered cyclic molecular unit, which other monomer is copolymerizable with the monomer producing the saturated six-membered cyclic molecular unit, and wherein the polymer containing a saturated six-membered cyclic molecular unit has a high number average molecular weight, so that it has not only excellent thermal properties in respect of, for example, a melting temperature, a glass transition temperature and a heat distortion temperature, but also excellent mechanical properties, such as high tensile modulus and high flexural modulus, and a method for producing such an excellent polymer containing a saturated six-membered cyclic molecular unit. As a result, the present inventor has found a method for producing such a polymer containing a saturated six-membered cyclic molecular unit. The method consists in polymerizing or copolymerizing at least one six-membered cyclic conjugated diene monomer, or at least one six-membered cyclic conjugated diene monomer and at least one comonomer copolymerizable therewith in the presence of a catalyst comprised of a mononuclear, binuclear or multinuclear complex of an organometallic compound containing a metal belonging to Group IA of the Periodic Table with a complexing agent, to thereby obtain a six-membered cyclic conjugated diene polymer, and subjecting the obtained six-membered cyclic conjugated diene polymer to an addition reaction, wherein the addition reaction is performed at a carbon-to-carbon double bond of the six-membered cyclic conjugated diene monomer unit, to thereby convert the six-membered cyclic conjugated diene monomer unit to a saturated six-membered cyclic molecular unit. With such a method for producing a polymer of the present invention, it has for the first time become possible to synthesize a high molecular weight polymer, containing a saturated six-membered cyclic molecular unit, which has never been reported. In addition, a technique to obtain a polymer containing a saturated six-membered cyclic molecular unit has been developed, in which saturated six-membered cyclic molecular units derived from six-membered cyclic conjugated diene monomers are introduced, in a desired proportion and in a desired configuration, as a part or all of monomer units constituting a main chain of the polymer. The present invention has been completed, based on these findings.

Accordingly, it is an object of the present invention to provide a cyclic olefin polymer comprising at least one type of six-membered cyclic olefin monomer unit, or comprising at least one type of six-membered cyclic olefin monomer unit and a monomer unit derived from at least one type of monomer other than the above-mentioned six-membered cyclic olefin monomer, which other monomer is copolymerizable with the six-membered cyclic olefin monomer, and wherein the six-membered cyclic olefin polymer has a high number average molecular weight, so that it has not only

excellent thermal properties in respect of, for example, a melting temperature, a glass transition temperature and a heat distortion temperature, but also excellent mechanical properties, such as high tensile modulus and high flexural modulus.

It is another object of the present invention to provide a method for effectively and efficiently producing such a polymer as mentioned above.

In one aspect of the present invention, there is provided

polymer containing a saturated cyclic molecular unit, comprising a main chain represented by the following formula (I):

$$[\ \text{-}(A)_a\text{-}\ \text{-}(B)_b\text{-}\ \text{-}(C)_c\text{-}\ \text{-}(D)_d\text{-}\ \text{-}(F)_f\text{-}\ ] \qquad (I)$$

wherein A to D and F are monomer units constituting said main chain in which monomer units A to D and F are arranged in any order, and a to d and f are, respectively, weight percentages of monomer units A to D and F, based on the total weight of monomer units A to D and F:

wherein:

A is selected from the class consisting of cyclic olefin monomer units each being represented by the following formula (IV):

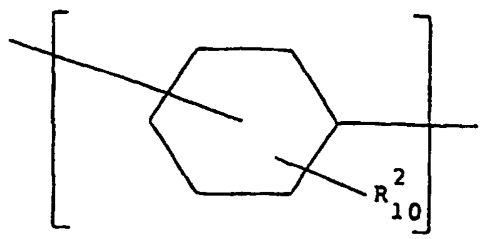

(IV)

wherein each $R^2$ independently represents a hydrogen atom, a halogen atom, a $C_1$-$C_{20}$ alkyl group, a $C_2$-$C_{20}$ unsaturated aliphatic hydrocarbon group, a $C_5$-$C_{20}$ aryl group, a $C_3$-$C_{20}$ cycloalkyl group, $C_4$-$C_{20}$ cyclodienyl group, an epoxy group, a hydroxyl group, a carboxyl group, a sulfonic acid group or a 5 to 10-membered heterocyclic group having at least one nitrogen, oxygen or sulfur atom as a heteroatom,

B is selected from the class consisting of cyclic conjugated diene monomer units each being represented by the following formula (V):

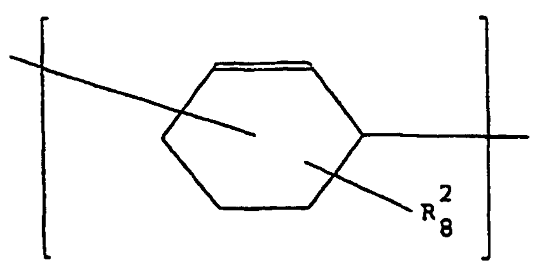

(V)

wherein each $R^2$ is as defined for formula (IV), with the proviso that $R^2$ of formula (V) is exclusive of epoxy group, a hydroxyl group, a carboxyl group and a sulfonic acid group,

C is selected from the class consisting of chain conjugated diene monomer units,

D is selected from the class consisting of vinyl aromatic monomer units, and

F is selected from the class consisting of an ethylene monomer unit and α-olefin monomer units; and

wherein:

a to d and f satisfy the following requirements:

$$a + b + c + d + f = 100.$$

$$0.001 \le a \le 100,$$

$$0 \le b < 100,$$

$$0 \le c < 100,$$

$$0 \le d < 100,$$

and

$$0 \le f < 100,$$

with the proviso that said monomer unit A is present in an amount of from 0.1 to 100 mole %, based on the total number of moles of the monomer units A and B, and that, when $0.001 \le (a+b) < 100$ and $0.001 \le a < 100$, said polymer is a block copolymer having at least one polymer block containing at least one A monomer unit, wherein, in said block copolymer, A monomer units are comprised of cyclic olefin monomer units which are the same or different, and said B monomer units are comprised of cyclic conjugated diene monomer units which are the same or different,

said polymer having a number average molecular weight of from 10,000 to 5,000,000 as measured by gel permeation chromatography, using 1,2,4-trichlorobenzene as a solvent and using a calibration curve of a standard polystyrene.

In another aspect of the invention there is provided a method for producing a polymer containing a saturated cyclic molecular unit, comprising a main chain represented by the following formula (I):

$$[\ -(A)_a-\ -(B)_b-\ -(C)_c-\ -(D)_d-\ -(F)_f-\ ] \qquad (I)$$

wherein A to D and F are monomer units constituting said main chain in which monomer units A to D and F are arranged in any order, and a to d and f are, respectively, weight percentages of monomer units A to D and F, based on the total weight of monomer units A to D and F;

wherein:

A is selected from the class consisting of cyclic olefin monomer units each being represented by the following formula (IV):

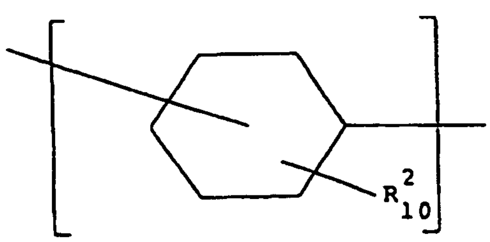

(IV)

wherein each $R^2$ independently represents a hydrogen atom, a halogen atom, a $C_1$-$C_{20}$ alkyl group, a $C_2$-$C_{20}$ unsaturated aliphatic hydrocarbon group, a $C_5$-$C_{20}$ aryl group, a $C_3$-$C_{20}$ cycloalkyl group, $C_4$-$C_{20}$ cyclodienyl group, an epoxy group, a hydroxyl group, a carboxyl group, a sulfonic acid group or a 5 to 10-membered heterocyclic group having at least one nitrogen, oxygen or sulfur atom as a heteroatom,

B is selected from the class consisting of cyclic conjugated diene monomer units each being represented by the following formula (V):

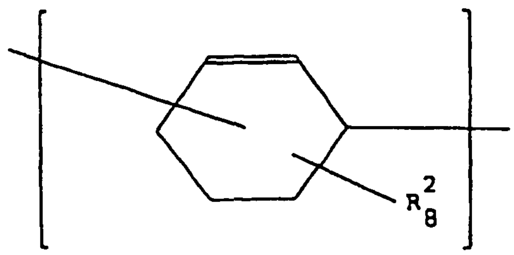

(V)

wherein each $R^2$ is as defined for formula (IV), with the proviso that $R^2$ of formula (V) is exclusive of epoxy group, a hydroxyl group, a carboxyl group and a sulfonic acid group,
C is selected from the class consisting of chain conjugated diene monomer units,
D is selected from the class consisting of vinyl aromatic monomer units, and
F is selected from the class consisting of an ethylene monomer unit and α-olefin monomer units; and

wherein:

a to d and f satisfy the following requirements:

$$a + b + c + d + f = 100,$$

$$0.001 \leq a \leq 100,$$

$$0 \leq b < 100,$$

$$0 \leq c < 100,$$

$$0 \leq d < 100,$$

and

$$0 \leq f < 100,$$

with the proviso that said monomer unit A is present in an amount of from 0.1 to 100 mole %, based on the total number of moles of the monomer units A and B, and that, when $0.001 \leq (a+b) < 100$ and $0.001 \leq a < 100$, said polymer is a block copolymer having at least one polymer block containing at least one A monomer unit, wherein, in said block copolymer, A monomer units are comprised of cyclic olefin monomer units which are the same or different, and said B monomer units are comprised of cyclic conjugated diene monomer units which are the same or different said polymer having a number average molecular weight of from 10,000 to 5,000,000 as measured by gel permeation chromatography, using 1,2,4-trichlorobenzene as a solvent and using a calibration curve of a standard polystyrene, which comprises the steps of:

(1) polymerizing at least one six-membered cyclic conjugated diene monomer, or copolymerizing at least one six-membered cyclic conjugated diene monomer and at least one comonomer copolymerizable therewith in the presence of a catalyst comprised of a mononuclear, binuclear or multinuclear complex of an organometallic compound containing a metal belonging to Group IA of the Periodic Table with a complexing agent comprised of an amine, said six-membered cyclic conjugated diene monomer being capable of producing a monomer unit represented by said formula (V), and said at least one comonomer being selected from the class consisting

of chain conjugated diene monomers and vinyl aromatic monomers, thereby obtaining a cyclic conjugated diene polymer comprising a main chain represented by the following formula (I');

$$[-(B')_{b'}-(C)_{c'}-(D)_{d'}] \qquad (I')$$

wherein B', C and D are monomer units constituting said main chain of formula (I') in which monomer units B' to D are arranged in any order, and b' to d' are, respectively, weight percentages of monomer units B' to D, based on the total weight of monomer units B' to D;
wherein:

B' has the same meaning as defined for B of formula (I), and C and D, respectively, have the same meanings as defined for formula (I); and

wherein:

b' to d' satisfy the following requirements:

$$b' + c' + d' = 100,$$

$$0.001 \leq b' \leq 100,$$

$$0 \leq c' < 100,$$

and

$$0 \leq d' < 100;$$

and wherein the copolymerization of said at least one conjugated diene monomer and said at least one comonomer is performed to obtain a block copolymer; and

(2) subjecting said cyclic conjugated diene polymer or block copolymer to an addition reaction selected from the group consisting of hydrogenation, halogenation, hydrohalogenation, sulfonation, hydration, halohydrination, alkylation, arylation and oxidation, wherein said addition reaction is performed at a carbon-to-carbon double bond of said B' monomer unit to the extent that 0.1 to 100 mole %, based on the number of moles of said B' monomer unit, of said B' monomer unit are saturated, to thereby convert 0.1 to 100 mole % of said B' monomer unit to said A monomer unit.

BRIEF DESCRIPTION OF THE DRAWINGS

In the accompanying drawings:

FIG. 1 is a chart showing the $^1$H-NMR spectrum of the six-membered cyclic conjugated diene homopolymer to be used as a starting material for the polymer of the present invention, obtained in Reference Example 4, which was measured using a deuteride form of 1,2-dichlorobenzene as a solvent;
FIG. 2 is a chart showing the $^1$H-NMR spectrum of the six-membered cyclic conjugated diene copolymer to be used as a starting material for the polymer of the present invention, obtained in Reference Example 5, which was measured using a deuteride form of chloroform as a solvent;
FIG. 3 is a chart showing the $^1$H-NMR spectrum of the polymer of the present invention, obtained in Example 8, which was measured using a deuteride form of 1,2-dichlorobenzene as a solvent;

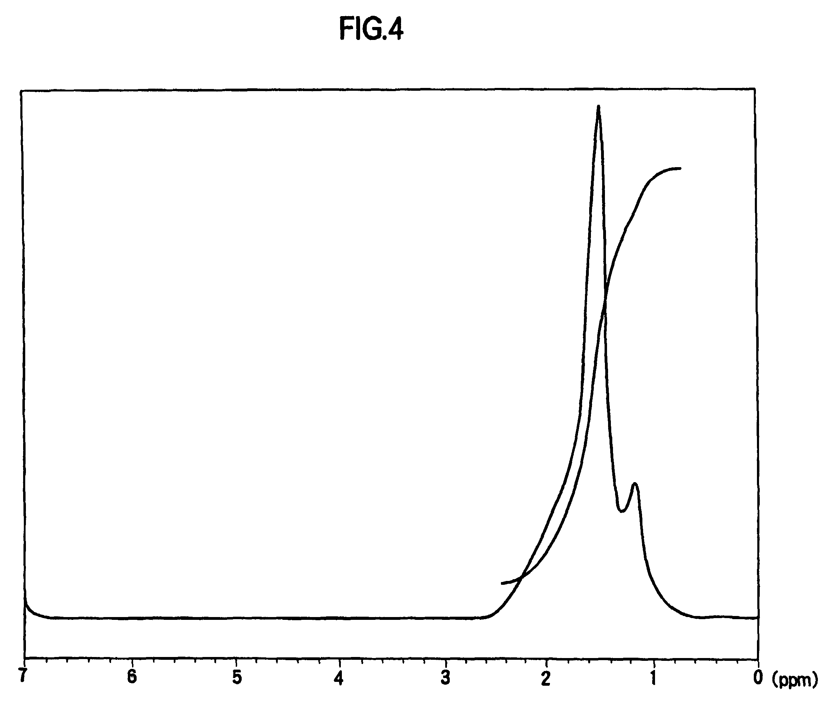

FIG. 4 is a chart showing the $^1$H-NMR spectrum of the polymer of the present invention, obtained in Example 9, which was measured using a deuteride form of 1,2-dichlorobenzene as a solvent.

DETAILED DESCRIPTION OF THE INVENTION

For easy understanding of the present invention, the essential features and various embodiments of the present invention are enumerated below.

1. A polymer containing a saturated cyclic molecular unit, comprising a main chain represented by the following formula (I):

$$[\ -(A)_a-\ -(B)_b-\ -(C)_c-\ -(D)_d-\ -(F)_f-\ ] \qquad (I)$$

wherein A to D and F are monomer units constituting said main chain in which monomer units A to D and F are arranged in any order, and a to d and f are, respectively, weight percentages of monomer units A to D and F, based on the total weight of monomer units A to D and F;
wherein:

A is selected from the class consisting of cyclic olefin monomer units each being represented by the following formula (IV):

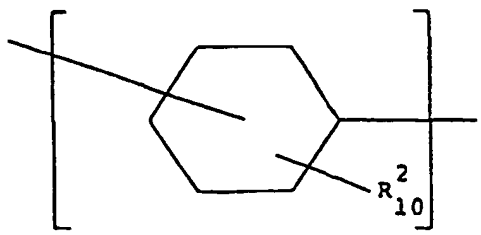

(IV)

wherein each $R^2$ independently represents a hydrogen atom, a halogen atom, a $C_1$-$C_{20}$ alkyl group, a $C_2$-$C_{20}$ unsaturated aliphatic hydrocarbon group, a $C_5$-$C_{20}$ aryl group, a $C_3$-$C_{20}$ cycloalkyl group, $C_4$-$C_{20}$ cyclodienyl group, an epoxy group, a hydroxyl group, a carboxyl group, a sulfonic acid group or a 5 to 10-membered heterocyclic group having at least one nitrogen, oxygen or sulfur atom as a heteroatom,
B is selected from the class consisting of cyclic conjugated diene monomer units each being represented by the following formula (V):

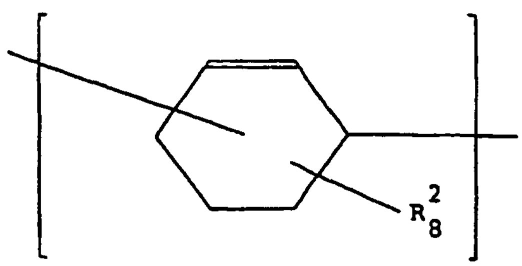

(V)

wherein each $R^2$ is as defined for formula (IV), with the proviso that $R^2$ of formula (V) is exclusive of epoxy group, a hydroxyl group, a carboxyl group and a sulfonic acid group,
C is selected from the class consisting of chain conjugated diene monomer units,
D is selected from the class consisting of vinyl aromatic monomer units, and
F is selected from the class consisting of an ethylene monomer unit and α-olefin monomer units; and

wherein:

a to d and f satisfy the following requirements:

$$a + b + c + d + f = 100,$$

$$0.001 \leq a \leq 100,$$

$$0 \leq b < 100,$$

$$0 \leq c < 100,$$

$$0 \leq d < 100,$$

and

$$0 \leq f < 100,$$

with the proviso that said monomer unit A is present in an amount of from 0.1 to 100 mole %, based on the total number of moles of the monomer units A and B, and that, when $0.001 \leq (a+b) < 100$ and $0.001 \leq a < 100$, said polymer is a block copolymer having at least one polymer block containing at least one A monomer unit, wherein, in said block copolymer, A monomer units are comprised of cyclic olefin monomer units which are the same or different, and said B monomer units are comprised of cyclic conjugated diene monomer units which are the same or different,

said polymer having a number average molecular weight of from 10,000 to 5,000,000 as measured by gel permeation chromatography, using 1,2,4-trichlorobenzene as a solvent and using a calibration curve of a standard polystyrene.

2. The polymer according to item 1 above, wherein a+b=100 and 0<b, and wherein said A monomer units are comprised of cyclic olefin monomer units which are the same or different, and said B monomer units are comprised of cyclic conjugated diene monomer units which are the same or different.

3. The polymer according to item 1 above, wherein a=100, and wherein said A monomer units are comprised of cyclic olefin monomer units which are the same or different.

4. The polymer according to item 1 above, wherein, in said block copolymer, said polymer block consists of A monomer units.

5. The polymer according to item 1 above, wherein, in said block copolymer, said polymer block further contains at least one B monomer unit.

6. The polymer according to item 1 above, wherein, in said block copolymer, said polymer block consists of at least one A monomer unit and at least one B monomer unit.

7. The polymer according to any one of items 1 to 6 above, wherein at least one of said cyclic olefin monomer units A is a cyclohexene monomer unit bonded at the and 4-positions and/or 1- and 2-positions thereof or a derivative thereof, and wherein at least one of said cyclic conjugated diene monomer units B is a 1,3-cyclohexadiene monomer unit or a derivative thereof.

8. A method for producing a polymer containing a saturated cyclic molecular unit, comprising a main chain represented by the following formula (I):

$$[ -(A)_a- -(B)_b- -(C)_c- -(D)_d- -(F)_f- ] \quad (I)$$

wherein A to D and F are monomer units constituting said main chain in which monomer units A to D and F are arranged in any order, and a to d and f are, respectively, weight percentages of monomer units A to D and F, based on the total weight of monomer units A to D and F;
wherein:

A is selected from the class consisting of cyclic olefin monomer units each being represented by the following formula (IV):

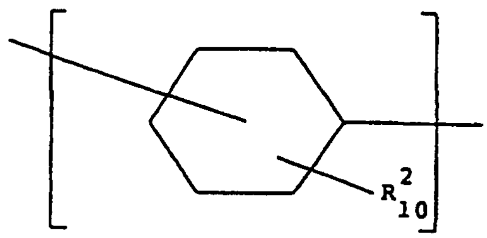

(IV)

wherein each $R^2$ independently represents a hydrogen atom, a halogen atom, a $C_1$-$C_{20}$ alkyl group, a $C_2$-$C_{20}$ unsaturated aliphatic hydrocarbon group, a $C_5$-$C_{20}$ aryl group, a $C_3$-$C_{20}$ cycloalkyl group, $C_4$-$C_{20}$ cyclodienyl group, an epoxy group, a hydroxyl group, a carboxyl group, a sulfonic acid group or a 5 to 10-membered heterocyclic group having at least one nitrogen, oxygen or sulfur atom as a heteroatom,
B is selected from the class consisting of cyclic conjugated diene monomer units each being represented by the following formula (V):

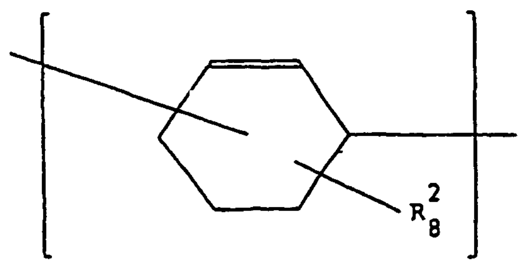

(V)

wherein each $R^2$ is as defined for formula (IV), with the proviso that $R^2$ of formula (V) is exclusive of epoxy group, a hydroxyl group, a carboxyl group and a sulfonic acid group,
C is selected from the class consisting of chain conjugated diene monomer units,
D is selected from the class consisting of vinyl aromatic monomer units, and
F is selected from the class consisting of an ethylene monomer unit and $\alpha$-olefin monomer units; and

wherein:

a to d and f satisfy the following requirements:

$$a + b + c + d + f = 100,$$

$$0.001 \leq a \leq 100,$$

$$0 \leq b < 100.$$

$$0 \leq c < 100,$$

$$0 \leq d < 100,$$

and

$$0 \leq f < 100,$$

with the proviso that said monomer unit A is present in an amount of from 0.1 to 100 mole %, based on the total number of moles of the monomer units A and B, and that, when $0.001 \leq (a+b) < 100$ and $0.001 \leq a < 100$, said polymer is a block copolymer having at least one polymer block containing at least one A monomer unit, wherein, in said block copolymer, A monomer units are comprised of cyclic olefin monomer units which are the same or different, and said B monomer units are comprised of cyclic conjugated diene monomer units which are the same or different,

said polymer having a number average molecular weight of from 10,000 to 5,000,000 as measured by gel permeation chromatography, using 1,2,4-trichlorobenzene as a solvent and using a calibration curve of a standard polystyrene, which comprises the steps of:

(1) polymerizing at least one six-membered cyclic conjugated diene monomer, or copolymerizing at least one six-membered cyclic conjugated diene monomer and at least one comonomer copolymerizable therewith in the presence of a catalyst comprised of a mononuclear, binuclear or multinuclear complex of an organometallic compound containing a metal belonging to Group IA of the Periodic Table with a complexing agent comprised of an amine, said six-membered cyclic conjugated diene monomer being capable of producing a monomer unit represented by said formula (V), and said at least one comonomer being selected from the class consisting of chain conjugated diene monomers and vinyl aromatic monomers, thereby obtaining a cyclic conjugated diene polymer comprising a main chain represented by the following formula (I');

$$[\,-(B')_{b'}-(C)_{c'}-(D)_{d'}\,] \qquad (I')$$

wherein B', C and D are monomer units constituting said main chain of formula (I') in which monomer units B' to D are arranged in any order, and b' to d' are, respectively, weight percentages of monomer units B' to D, based on the total weight of monomer units B' to D;
wherein:

B' has the same meaning as defined for B of formula (I), and C and D, respectively, have the same meanings as defined for formula (I); and

wherein:

b' to d' satisfy the following requirements:

$$b' + c' + d' = 100,$$

$$0.001 \leq b' \leq 100,$$

$$0 \leq c' < 100,$$

and

$$0 \leq d' < 100;$$

and
wherein the copolymerization of said at least one conjugated diene monomer and said at least one comonomer is carried out to obtain a block copolymer; and

(2) subjecting said cyclic conjugated diene polymer or block copolymer to an addition reaction selected from the group consisting of hydrogenation, halogenation, hydrohalogenation, sulfonation, hydration, halohydrination, alkylation, arylation and oxidation, wherein said addition reaction is carried out at a carbon-to-carbon double bond of said B' monomer unit to the extent that 0.1 to 100 mole %, based on the number of moles of said B' monomer unit, of said B' monomer unit are saturated, thereby converting 0.1 to 100 mole of said B' monomer unit to said A monomer unit.

9. The method according to item 8 above, wherein said addition reaction in step (2) is a hydrogenation reaction.

10. The method according to item 8 or 9 above, wherein said catalyst is prepared prior to the polymerization.

In the present invention, the monomer units of the polymer are named in accordance with a nomenclature such that the names of the original monomers from which the monomer units are derived, as such, are used with the term "unit" attached thereto. For example, the term "cyclic olefin monomer unit" means a monomer unit which is formed in a polymer obtained by the polymerization of a cyclic olefin monomer and which has a molecular structure such that a cycloalkane corresponding to the cyclic olefin monomer is bonded at two carbon atoms of a skeleton thereof.
Hereinafter, the six-membered cyclic molecular unit in the desired polymer of the present invention is frequently referred to simply as "cyclic molecular unit", and the six-membered cyclic conjugated diene monomer used for producing a six-membered cyclic olefin polymer to be subjected to addition reaction in the method of the present invention is frequently referred to simply as "cyclic conjugated diene monomer".
The polymer of the present invention is a polymer comprising a main chain which is comprised partly or entirely of saturated cyclic molecular units. Specifically, the polymer of the present invention is a polymer, containing a saturated cyclic molecular unit, which comprises a main chain represented by the above-mentioned formula (I).
More specifically, the polymer of the present invention is a polymer comprising a main chain which is comprised partly or entirely of saturated cyclic molecular units which are linked at the 1- and 4-positions thereof, or 1- and 2-positions thereof.
Specific examples of such a polymer of the present invention include those which are obtained by subjecting a homopolymer of a cyclic conjugated diene monomer, a copolymer of at least two types of cyclic conjugated diene monomers, or a copolymer of a cyclic conjugated diene monomer and a comonomer copolymerizable with the cyclic conjugated diene monomer, to an addition reaction, wherein the addition reaction is performed at a carbon-to-carbon double bond or bonds in a part or all of the cyclic conjugated diene monomer units, to thereby convert the cyclic conjugated diene monomer unit to a saturated cyclic molecular unit.
As a method for producing a polymer of the present invention, there can be mentioned a method which comprises polymerizing or copolymerizing cyclic conjugated diene monomers to thereby obtain a cyclic conjugated diene polymer, and subjecting the obtained cyclic conjugated diene polymer to an addition reaction, wherein the addition reaction is performed at a carbon-to-carbon double bond or bonds in a part or all of the cyclic conjugated diene monomer units contained in the cyclic conjugated diene polymer, to thereby convert the unsaturated carbon-to-carbon bond or bonds to a saturated bond or bonds; and a method which comprises polymerizing or copolymerizing a cyclic olefin monomer to thereby obtain a cyclic olefin polymer having a saturated cyclic molecular unit.
From a commercial point of view, it is preferred to employ a method which comprises polymerizing or copolymerizing cyclic conjugated diene monomers to thereby obtain a cyclic conjugated diene polymer, and subjecting the obtained cyclic conjugated diene polymer to an addition reaction, wherein the addition reaction is preformed at a carbon-to-carbon double bond or bonds in a part or all of the cyclic conjugated diene monomer units contained in the cyclic conjugated diene polymer, to thereby convert the cyclic conjugated diene monomer unit to a saturated cyclic molecular unit.
It is especially preferred that the saturated cyclic molecular unit be a molecular unit, represented by the following formula (IV), which has a 6-membered carbocyclic structure formed by carbon-to-carbon single bonds:

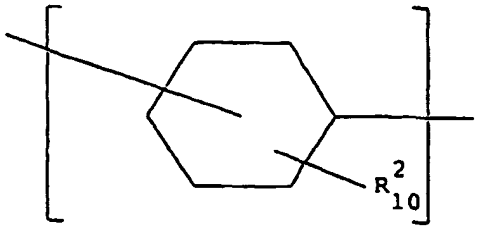

(IV)

wherein each $R^2$ independently represents a hydrogen atom, a halogen atom, a $C_1$-$C_{20}$ alkyl group, a $C_2$-$C_{20}$ unsaturated aliphatic hydrocarbon group, a $C_5$-$C_{20}$ aryl group, a $C_3$-$C_{20}$ cycloalkyl group, $C_4$-$C_{20}$ cyclodienyl group, an epoxy group, a hydroxyl group, a carboxyl group, a sulfonic acid group or a 5 to 10-membered heterocyclic group having at least one nitrogen, oxygen or sulfur atom as a heteroatom.

In the present invention, as represented by the above formula (IV), the saturated cyclic molecular unit may be comprised solely of carbon atoms and hydrogen atoms, or may contain a halogen atom, such as a fluorine atom, a chlorine atom, a bromine atom or an iodine atom; and/or one or more of at least one type of organic substituent, such as an alkyl group, an aryl group.

Examples of such organic substituents include an aliphatic group, such as a methyl group, an ethyl group, a propyl group, a butyl group, a pentyl group, a hexyl group, and a cyclohexyl group; or a cyclic alkyl group represented by the formula $(CH_m)_n$ (wherein m is an integer of from 0 to 2, and n is a positive integer); and an aromatic group, such as a phenyl group, a tolyl group, a naphthyl group, a cyclopentadienyl group, an indenyl group and a pyridyl group. These organic substituents may be used individually or in combination.

It is most preferred that the saturated cyclic molecular unit be a saturated cyclic molecular unit which is composed solely of carbon atoms and hydrogen atoms and has a 6-membered carbocyclic structure, namely, a cyclohexane ring.

The polymer of the present invention may contain a cyclic conjugated diene monomer unit in an amount represented by the formula $0 \leqq b < 100$, wherein b represents a weight percentage of the cyclic conjugated diene monomer, based on the weight of the main chain of the polymer.

It is especially preferred that the cyclic conjugated diene monomer unit be a monomer unit derived from a cyclic conjugated diene having a 6-membered carbocyclic structure, represented by the following formula (V):

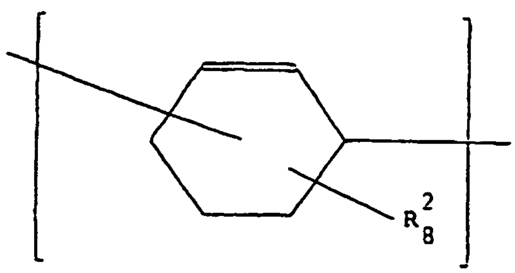

(V)

wherein each $R^2$ is as defined for formula (IV), with the proviso that $R^2$ of formula (V) is exclusive of epoxy group, a hydroxyl group, a carboxyl group and a sulfonic acid group.

Examples of cyclic conjugated diene monomer units include monomer units derived from 1,3-cyclohexadiene and derivatives thereof. Preferred examples of cyclic conjugated diene monomer units include monomer units derived from 1,3-cyclohexadiene and 1,3-cyclohexadiene derivatives. Of these, a monomer unit derived from 1,3-cyclohexadiene is most preferred.

In the present invention, examples of comonomer units copolymerizable with the cyclic conjugated diene monomer unit include chain conjugated diene monomer units derived from 1,3-butadiene, isoprene, 2,3-dimethyl-1,3-butadiene, 1,3-pentadiene and 1,3-hexadiene; vinyl aromatic monomer units derived from styrene, α-methylstyrene, o-methylstyrene, p-methylstyrene, p-tert-butylstyrene, 2,4-dimethylstyrene, divinylbenzene, vinylnaphthalene, diphenylethylene and vinylpyridine; polar vinyl monomer units derived from methyl methacrylate, methyl acrylate, acrylonitrile, methyl vinyl ketone and methyl α-cyanoacrylate; polar monomer units derived from ethylene oxide, propylene oxide, lactone, lactam and cyclosiloxane; an ethylene monomer unit; and an α-olefin monomer unit. Each of these monomer units can be used individually or in combination.

In the present invention, a copolymer of the cyclic conjugated diene monomer with the above-mentioned

comonomer may be of any configuration. For example, the copolymer may be a block copolymer, such as a diblock, a triblock, a tetrablock, a multiblock, a radial block, a star block, or a comb block copolymer, or a taper copolymer.

In the polymer of the present invention, the content of the saturated cyclic molecular unit may vary depending on the intended use of the polymer. However, the content of the saturated cyclic molecular unit is within the range of from 0.001 to 100 wt%, preferably from 0.01 to 100 wt%, more preferably from 0.1 to 100 wt%, based on the weight of the main chain of the polymer.

Further, for obtaining a polymer of the present invention which can be used in a field where the polymer is required to have high thermal and mechanical properties, it is recommended that the content of the saturated cyclic molecular unit in the polymer be within the range of from 1 to 100 wt%, more preferably from 2 to 100 wt%, most preferably from 5 to 100 wt%, based on the weight of the main chain of the polymer.

In the polymer of the present invention, the saturated cyclic molecular unit is present in an amount of from 0.1 to 100 mole %, based on the total number of moles of the saturated cyclic molecular unit and the cyclic conjugated diene monomer unit.

In the polymer of the present invention, the ratio of the number of moles of the saturated cyclic molecular unit to the total number of moles of the saturated cyclic molecular unit and the cyclic conjugated diene monomer unit may vary depending on the intended use of the polymer. However, the saturated cyclic molecular unit is present in an amount of from 0.1 to 100 mole %, preferably from 5 to 100 mole %, more preferably from 10 to 100 mole %, most preferably from 20 to 100 mole %.

Further, for obtaining a polymer of the present invention which can be used in a field where the polymer is required to have particularly high thermal and mechanical properties, it is recommended that the saturated cyclic molecular unit be present in an amount of from 50 to 100 mole %, preferably from 70 to 100 mole %, most preferably 90 mole % or more, based on the total number of moles of the saturated cyclic molecular unit and the cyclic conjugated diene monomer unit.

The polymer of the present invention has a number average molecular within the range of from 10,000 to 5,000,000. From the viewpoint of productivity in the commercial scale production of such a polymer, it is recommended that the number average molecular weight of the polymer be within the range of from 15,000 to 5,000,000, preferably within the range of from 20,000 to 3,000,000, more preferably from 25,000 to 2,000,000, still more preferably from 30,000 to 1,000,000. The most preferred range is from 40,000 to 500,000.

When the number average molecular weight of such a polymer is less than 10,000, the polymer is likely to be a markedly brittle solid substance or a viscous liquid, so that the commercial value of the polymer as an industrial material becomes extremely low.

On the other hand, when the number average molecular weight of such a polymer is more than 5,000,000, the polymer is disadvantageous in various aspects from a commercial viewpoint. For example, a copolymer having such a high molecular weight has disadvantages in that a prolonged period of time is needed for the polymerization reaction, and the melt viscosity of the polymer obtained becomes high.

In the present invention, the number average molecular weight of the polymer is given in terms of a value obtained by subjecting a solution of the polymer in 1,2,4-trichlorobenzene to gel permeation chromatography (GPC), using a calibration curve of a standard polystyrene.

When the polymer of the present invention is a block copolymer containing in a part of the polymeric molecular chain thereof a polymer block containing a saturated cyclic molecular unit, or a polymer block being constituted only of saturated cyclic molecular units, the molecular weight of the polymer block may be appropriately controlled in accordance with the intended use. However, from the viewpoint of thermal and mechanical properties of the block copolymer of the present invention, it is recommended that the polymer block contain a contiguous arrangement of at least 10 saturated cyclic molecular units, preferably 20 or more saturated cyclic molecular units, more preferably 30 or more saturated cyclic molecular units.

When the polymer of the present invention is a copolymer comprising a polymer block comprised only of a saturated cyclic molecular unit, or comprising a polymer block comprised of a saturated cyclic molecular unit and a monomer unit derived from at least one type of comonomer copolymerizable with the saturated cyclic monomer, the method of producing the polymer comprises preparing a block unit polymer comprised only of cyclic conjugated diene monomer units, a block unit polymer comprised of a cyclic conjugated diene monomer unit and a monomer unit derived from at least one type of comonomer copolymerizable with the cyclic conjugated diene monomer, and a block unit polymer comprised only of monomer units derived from at least one type of comonomer copolymerizable with the cyclic conjugated diene monomer; choosing an appropriate combination of these block unit polymers; polymerization-bonding the combination of block unit polymers together; and subjecting the resultant cyclic conjugated diene block copolymer to an addition reaction.

Specific examples of preferred modes of the method of the present invention include the following modes.

One mode of the method comprises the steps of forming by polymerization a block unit polymer containing a cyclic conjugated diene monomer unit, or a block unit polymer comprised only of the cyclic conjugated diene monomer

unit; polymerizing the block unit polymer with at least one type of comonomer copolymerizable with the cyclic conjugated diene monomer, wherein the comonomer is successively bonded to one or both terminals of the block unit polymer by polymerization; and subjecting the resultant block copolymer to an addition reaction.

Another mode of the method comprises the steps of polymerizing at least one type of comonomer copolymerizable with a cyclic conjugated diene monomer to obtain a block unit polymer; polymerizing the block unit polymer with at least one cyclic conjugated diene monomer, and optionally with at least one type of comonomer copolymerizable with the cyclic conjugated diene monomer, wherein the cyclic conjugated diene monomer and the optional comonomer are successively bonded to one or both terminals of the block unit polymer by polymerization; and subjecting the resultant block copolymer to an addition reaction.

A further mode of the method comprises the steps of forming by polymerization a block unit polymer containing a cyclic conjugated diene monomer unit, or a block unit polymer comprised only of the cyclic conjugated diene monomer unit; polymerizing the block unit polymer with at least one type of comonomer copolymerizable with the cyclic conjugated diene monomer to obtain a polymer; successively bonding to the polymer by polymerization a block unit polymer containing a cyclic conjugated diene monomer unit or a block unit polymer comprised only of the cyclic conjugated diene monomer unit; and subjecting the resultant block copolymer to an addition reaction.

Still a further mode of the method comprises the steps of polymerizing at least one type of comonomer copolymerizable with the cyclic conjugated diene monomer to obtain a block unit polymer; polymerizing the block unit polymer with a block unit polymer containing a cyclic conjugated diene monomer unit or a block unit polymer comprised only of the cyclic conjugated diene monomer unit; successively bonding to the resultant polymer by polymerization at least one type of comonomer copolymerizable with the cyclic conjugated diene monomer; and subjecting the resultant block copolymer to an addition reaction.

Still a further mode of the method comprises the steps of forming by polymerization a block unit polymer containing a cyclic conjugated diene monomer unit or a block unit polymer comprised only of the cyclic conjugated diene monomer unit; polymerizing the block unit polymer with at least one type of comonomer copolymerizable with the cyclic conjugated diene monomer to obtain a polymer; bonding the terminals of the polymeric molecular chain of the polymer using a conventional at least-bi-functional coupling agent (such as dimethyldichlorosilane, methyltrichlorosilane, dimethyldibromosilane, methyltribromosilane, titanocene dichloride, methylene chloride, methylene bromide, chloroform, carbon tetrachloride, silicon tetrachloride, titanium tetrachloride, tin tetrachloride, an epoxidized soybean oil, or an ester); and subjecting the resultant block copolymer to an addition reaction.

Still a further mode of the method comprises the steps of forming by polymerization a block unit polymer containing a cyclic conjugated diene monomer unit or a block unit polymer comprised only of the cyclic conjugated diene monomer unit; introducing a functional group to one or both terminals of the block unit polymer using a terminal modifier, to obtain a functional block unit polymer; subjecting the functional block unit polymer to an addition reaction; and bonding the resultant functional, saturated block unit polymer to another polymer having a functional group which can be bonded to the functional group of the above-obtained functional, saturated block unit polymer.

Still a further mode of the method comprises steps of forming by polymerization a block unit polymer containing a cyclic conjugated diene monomer unit or a block unit polymer comprised only of the cyclic conjugated diene monomer unit; polymerizing the block unit polymer with at least one type of comonomer copolymerizable with the cyclic conjugated diene monomer to obtain a polymer; introducing a functional group to one or both terminals of the thus obtained polymer using a terminal modifier to obtain a functional polymer; subjecting the functional polymer to an addition reaction; and bonding the resultant functional, saturated polymer to another polymer having a functional group which can be bonded to the functional group of the above functional, saturated polymer.

Still a further mode of the method comprises polymerizing a cyclic conjugated diene monomer with at least one type of comonomer copolymerizable with the cyclic conjugated diene monomer, wherein the at least one type of comonomer has a different polymerization rate from that of the cyclic conjugated diene monomer; and subjecting the resultant block copolymer to an addition reaction.

Still a further mode of the method comprises polymerizing a cyclic conjugated diene monomer and at least one type of comonomer copolymerizable with the cyclic conjugated diene monomer, wherein the ratio of the cyclic conjugated diene monomer to the at least one type of comonomer is not a unity; and subjecting the resultant block copolymer to an addition reaction.

In the present invention, the block unit polymer containing a cyclic conjugated diene monomer unit may further comprise a monomer unit derived from at least one type of comonomer copolymerizable with the cyclic conjugated diene monomer.

Further, in the present invention, the block unit polymer containing a monomer unit derived from at least one type of comonomer copolymerizable with a cyclic conjugated diene monomer may further comprise at least one monomer unit selected from the class consisting of cyclic conjugated diene monomer units.

In the present invention, with respect to cyclic conjugated diene monomers and to polymer blocks comprised of such monomer units, it is most preferred to use a monomer unit comprising a cyclohexene ring and a block unit

polymer comprising or consisting of monomer units comprising a cyclohexene ring.

In the polymer of the present invention, with respect to polymer blocks comprising a saturated cyclic molecular unit, it is most preferred to use a polymer block comprising a monomer unit comprised of a cyclohexane ring or consisting of monomer units each comprised of a cyclohexane ring, wherein the polymer block comprising the cyclohexane ring is obtained by subjecting a polymer block comprising the cyclohexene ring to an addition reaction.

A preferred method for producing the polymer (containing a saturated cyclic molecular unit) of the present invention comprises the steps of:

(1) polymerizing at least one six-membered cyclic conjugated diene monomer, or copolymerizing at least one six-membered cyclic conjugated diene monomer and at least one comonomer copolymerizable therewith, said six-membered cyclic conjugated diene monomer being capable of producing a monomer unit represented by said formula (V), and said at least one comonomer being selected from the class consisting of chain conjugated diene monomers and vinyl aromatic monomers, thereby obtaining a cyclic conjugated diene polymer comprising a main chain represented by the following formula (I');

$$[\!-\!(B')_{b'} \; -\!(C)_{c'} \; -\!(D)_{d'} \;] \qquad (I')$$

wherein B', C and D are monomer units constituting said main chain of formula (I') in which monomer units B' to D are arranged in any order, and b' to d' are, respectively, weight percentages of monomer units B' to D, based on the total weight of monomer units B' to D;
wherein:

B' has the same meaning as defined for B of formula (I), and C and D, respectively, have the same meanings as defined for formula (I); and

wherein:

b' to d' satisfy the following requirements:

$$b' + c' + d' = 100,$$

$$0.001 \le b' \le 100,$$

$$0 \le c' < 100,$$

and

$$0 \le d' < 100;$$

and
wherein the copolymerization of said at least one conjugated diene monomer and said at least one comonomer is performed to obtain a block copolymer; and
(2) subjecting said cyclic conjugated diene polymer or block copolymer to an addition reaction selected from the group consisting of hydrogenation, halogenation, hydrohalogenation, sulfonation, hydration, halohydrination, alkylation, arylation and oxidation, wherein said addition reaction is performed at a carbon-to-carbon double bond of said B' monomer unit to the extent that 0.1 to 100 mole %, based on the number of moles of said B' monomer unit, of said B' monomer unit are saturated, to thereby convert 0.1 to 100 mole % of said B' monomer unit to said A monomer unit.

Examples of cyclic conjugated diene monomers include 1,3-cyclohexadiene and derivatives thereof. Of these, 1,3-cyclohexadiene is most preferred.

In the present invention, as examples of comonomers copolymerizable with the cyclic conjugated diene monomer, there can be mentioned monomers which can be polymerized by anionic polymerization.

Examples of such monomers include chain conjugated diene monomers, such as 1,3-butadiene, isoprene, 2,3-dimethyl-1,3-butadiene, 1,3-pentadiene and 1,3-hexadiene; and vinyl aromatic monomers, such as styrene, α-methylstyrene, o-methylstyrene, p-methylstyrene, p-tert-butylstyrene, 2,4-dimethylstyrene, divinylbenzene, vinylnaphthalene, diphenylethylene and vinylpyridine. Each of these monomers can be used individually or in combination.

In the present invention, a copolymer of the cyclic conjugated diene monomer with the above-mentioned comonomer may be of any configuration. For example, the copolymer may be a block copolymer, such as a diblock, a triblock, a tetrablock, a multiblock, a radial block, a star block or a comb block copolymer, or a taper copolymer.

When the polymer, which contains a saturated cyclic molecular unit, of the present invention is a polymer obtained by subjecting a cyclic conjugated diene polymer to an addition reaction, the content of the cyclic conjugated diene monomer unit in the cyclic conjugated diene polymer as a starting material may be appropriately controlled depending on the intended use of the polymer. However, the content of the cyclic conjugated diene monomer unit is within the range of from 0.001 to 100 wt%, preferably from 0.01 to 100 wt%, more preferably from 0.1 to 100 wt%.

Especially for obtaining the polymer (containing a saturated cyclic molecular unit) of the present invention which can be used in a field where the polymer is required to have high thermal and mechanical properties, it is recommended that the content of the cyclic conjugated diene monomer unit in the cyclic conjugated diene polymer as a starting material be within the range of from 5 to 100 wt%, more preferably from 10 to 100 wt%, most preferably from 15 to 100 wt%.

In the method for producing the polymer (containing a saturated cyclic molecular unit) of the present invention, which involves step (1) of polymerizing a cyclic conjugated diene monomer to form a cyclic conjugated diene polymer comprising a main chain represented by the above-mentioned formula (I'), it is preferred that a polymerization catalyst having an anionic polymerization activity, particularly a living anionic polymerization activity, be used in the polymerization step (1).

The polymerization catalyst which is preferably used in the present invention is a complex comprising an organometallic compound containing a metal belonging to Group IA of the Periodic Table (Group IA metal) with a complexing agent. This complex as a polymerization active species has a mononuclear, binuclear or multinuclear complex structure, more preferably a binuclear or multinuclear complex structure.

Heretofore, various types of catalysts having a living anionic polymerization activity have been proposed. For example, organometallic compounds containing a Group IA metal or complexes of the organometallic compounds containing a Group IA metal with complexing agents have already been widely used as living anionic polymerization catalysts.

Among these complexes of organometallic compounds containing a Group IA metal, particularly with respect to a complex of an alkyllithium (R-Li) with TMEDA (tetramethylethylenediamine) as a complexing agent, extensive studies have been made.

N.Y. Acad. Sci. 27, 741 (1965) teaches that such a complex as the polymerization active species has a mononuclear alkyllithium - TMEDA complex structure represented by the formula (VI) shown below, which is characterized by containing one metal atom in one complex.

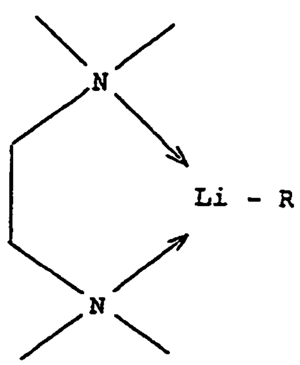

(VI)

wherein R represents a $C_1$-$C_{20}$ alkyl group.

In the prior art, there is a teaching such that, when TMEDA is added to a system of associated molecules of alkyllithium, the TMEDA reacts with the alkyllithium to form a complex, thereby destroying the association of the alkyllithium molecules, so that a mononuclear active species is formed, leading to polymerization activity of the alkyllithium type catalyst.

Accordingly, it is suggested that, when a conventional polymerization catalyst is used, a single metal cation

is present at the respective terminals of polymeric molecular chains growing in arbitrary directions, and the terminals each containing a single metal cation are individually reached by a monomer from the arbitrary directions, so that a polymerization reaction proceeds.

As viewed from a different angle, this suggests that when a conventional polymerization catalyst is used, the molecular structure of a polymer chain is influenced by external factors, such as the reaction temperature, so that it becomes extremely difficult to control the molecular structure of a polymer chain.

That is, conventional living anionic polymerization catalysts do not have a satisfactory polymerization activity for use in a commercial scale practice of polymerization of monomers which have a large steric hindrance and therefore are difficult to polymerize, such as cyclic conjugated diene monomers. Further, any of the conventional techniques does not teach or suggest that when such a conventional anionic polymerization catalyst is used, the structure of the polymeric molecular chain can be satisfactorily controlled.

The present inventor has found a surprising fact which is contrary to the conventional recognition of a living anionic polymerization catalyst. That is, the present inventor has surprisingly, unexpectedly found that, with respect to a complex of an organometallic compound containing a Group IA metal with a complexing agent, a complex structure capable of well self-stabilizing an association of the molecules of the organometallic compound containing a Group IA metal is most effective for providing an excellent polymerization active species. Based on this finding, the polymerization catalyst which can be most preferably used in the method of the present invention has been successfully developed.

In the polymerization method for obtaining a cyclic conjugated diene polymer which is a most preferred starting material for producing the polymer of the present invention, a mononuclear, binuclear or multinuclear complex of an organometallic compound containing a Group IA metal can be used.

More preferably, the polymerization catalyst to be used in the present invention is a binuclear or multinuclear complex of an organometallic compound containing a Group IA metal, which complex has a complex structure capable of self-stabilizing an association of the molecules of the organometallic compound and self-maintaining the complex structure even in the presence of monomers.

The polymerization method of the present invention for producing the cyclic conjugated diene polymer is advantageous in that, by using a specific complex of a Group IA metal, it becomes possible to suppress the occurrence of unfavorable side reactions at polymer terminals (which side reactions are caused by cyclic conjugated diene monomers themselves), such as a transfer reaction caused by the abstraction of a Group IA metal cation present in the polymer terminal, and a reaction of elimination of lithium hydride, so that it has for the first time become possible to polymerize or copolymerize a cyclic conjugated diene monomer into a homopolymer or copolymer having a high degree of polymerization.

In the present invention, the term "binuclear complex" means a complex of an organometallic compound containing a Group IA metal, wherein two atoms of the Group IA metal are associated together to form an association unit. The term "multinuclear complex" means a complex of an organometallic compound containing a Group IA metal, wherein three or more atoms of the Group IA metal are associated together to form an association unit.

In the present invention, with respect to the multinuclear complex, as long as three or more atoms of the Group IA metal are associated together, the association form of the atoms may vary depending on the respective types of the organometallic compound and the complexing agent, and the intended use of the complex, and a most stable association form can be appropriately selected.

In the present invention, it is preferred that the Group IA metal in the multinuclear complex be present in the form of an association of 3 to 20 metal atoms, more preferably 3 to 10 metal atoms. From a commercial point of view, it is most preferred that the Group IA metal in the multinuclear complex be present in the form of an association of 4 to 6 metal atoms.

The polymerization catalyst to be used in the present invention has not only a satisfactory polymerization activity for use in a commercial scale practice of polymerization of monomers, which have a large steric hindrance and therefore are difficult to polymerize, such as a cyclic conjugated diene monomer, but also the capability to self-maintain the complex structure thereof even in the presence of monomers to be polymerized. The polymerization reaction using the polymerization catalyst to be used in the present invention is a living anionic polymerization reaction. Despite this, however, the reaction proceeds like a coordination polymerization, that is, by virtue of the specific structure of the catalyst to be used in the present invention, a monomer to be polymerized is inserted into the complex as a polymerization active species as in a coordination polymerization. Therefore, even when the catalyst to be used in the present invention is used for polymerization of other known monomers which can be polymerized by anionic polymerization, the molecular structure of the resultant polymer can be satisfactorily controlled.

Examples of Group IA metals, which can be used in the polymerization catalyst to be used in the present invention, include lithium, sodium, potassium, rubidium, cesium and francium. Of these, lithium, sodium and potassium are preferred, and lithium is especially preferred. These metals may be used individually or, if desired, in combination.

Preferable examples of complexes, which can be used in the above-mentioned polymerization step (1) of the method for producing the polymer of the present invention, include complexes of organometallic compounds containing

a Group IA metal, such as complexes of an organolithium compound, an organosodium compound, or an organopotassium compound. The most preferable complex is a complex of an organolithium compound.

The organolithium compound, which can be preferably used in the polymerization catalyst to be used in the above-mentioned polymerization step (1) of the production method of the present invention, is a compound containing at least one lithium atom bonded to an organic molecule containing at least one carbon atom or to an organic polymer. Examples of such organic molecule residues include a $C_1$-$C_{20}$ alkyl group, a $C_2$-$C_{20}$ unsaturated aliphatic hydrocarbon group, a $C_5$-$C_{20}$ aryl group, a $C_3$-$C_{20}$ cycloalkyl group, and a $C_4$-$C_{20}$ cyclodienyl group. Examples of organolithium compounds usable in the polymerization catalyst to be used in the present invention include methyllithium, ethyllithium, n-propyllithium, iso-propyllithium, n-butyllithium, sec-butyllithium, tert-butyllithium, pentyllithium, hexyllithium, aryllithium, cyclohexyllithium, phenyllithium, hexamethylenedilithium, cyclopentadienyllithium, indenyllithium, butadienyldilithium, and isoprenyldilithium. Further, known oligomeric or polymeric organolithium compounds, each containing a lithium atom in a polymeric molecular chain thereof, such as polybutadienyllithium, polyisoprenyllithium and polystyryllithium, can also be used.

Representative examples of such organolithium compounds include methyllithium, ethyllithium, n-butyllithium, sec-butyllithium, tert-butyllithium and cyclohexyllithium. Of these, butyllithium is most preferred from a commercial point of view.

In the present invention, each of the above-mentioned organometallic compounds (containing a Group IA metal) of the polymerization catalyst which is used in the polymerization step (1) of the production method of the present invention can be used individually or, if desired, in combination.

With respect to the type and amount of the complexing agent to be used for forming a complex with an organometallic compound containing a Group IA metal, one or more types of complexing agents can be appropriately selected depending on the reaction conditions, so that the cation of the Group IA metal of the organometallic compound is most effectively protected.

More specifically, as the complexing agent, an organic compound can be used which is capable of donating an electron to the Group IA metal of an organometallic compound containing a Group IA metal. Examples of such an organic compound.

That is the complexing agent to be used with an organometallic compound containing a Group IA metal for forming a complex be an amine.

Specifically, for obtaining a cyclic conjugated diene polymer in the above-mentioned polymerization step (1), in the polymerization catalyst to be used in the present invention, it is especially preferred that a complex be formed from a Group IA metal-containing organometallic compound and an amine, and it is most preferred that a complex be formed from an organolithium compound and an amine.

Examples of amines which are most preferably used as the complexing agent for forming the polymerization catalyst to be used in the present invention include an organic compound or organic polymer containing at least one $R^1R^{2'}N$- group (wherein each of $R^1$ and $R^{2'}$ independently represents a hydrogen atom, a $C_1$-$C_{20}$ alkyl group, a $C_2$-$C_{20}$ unsaturated aliphatic hydrocarbon group, a $C_5$-$C_{20}$ aryl group, a $C_3$-$C_{20}$ cycloalkyl group, a $C_4$-$C_{20}$ cyclodienyl group, or a 5 to 10-membered heterocyclic group having at least one nitrogen, oxygen or sulfur atom as a heteroatom), which is a polar group having a non-covalent electron pair capable of coordinating with the organometallic compound containing a Group IA metal.

Among these amines, a tert-amine is most preferred.

Examples of tert-amines include trimethylamine, triethylamine, dimethylaniline, diethylaniline, tetramethyldiaminomethane, tetramethylethylenediamine, tetramethyl-1,3-propanediamine, tetramethyl-1,3-butanediamine, tetramethyl-1,4-butanediamine, tetramethyl-1,6-hexanediamine, tetramethyl-1,4-phenylenediamine, tetramethyl-1,8-naphthalenediamine, tetramethylbenzidine, tetraethylethylenediamine, tetraethyl-1,3-propanediamine, tetramethyldiethylenetriamine, pentamethyldiethylenetriamine, diazabicyclo-[2,2,2]octane, 1,5-diazabicyclo[4,3,0]-5-nonene, 1,8-diazabicyclo-[5,4,0]-7-undecene, 1,4,8,11-tetramethyl-1,4,8,11-tetraazacyclotetradecane, tetrakis(dimethylamino) ethylene, tetraethyl-2-butene-1,4-diamine, 2,2'-bipyridyl, 4,4'-bipyridyl, 1,10-phenanthroline, hexamethylphosphoric triamide.

Among these, tetraethylethylenediamine (TEEDA), tetramethylethylenediamine (TMEDA), tetramethyldiethylenetriamine (TMEDTA), pentamethyldiethylenetriamine (PMDT), diazabicyclo[2,2,2]octane (DABACO), 2,2'-bipyridyl, 4,4'-bipyridyl, 1,10-phenanthroline, and hexamethylphosphoric triamide (HMPA) are more preferred.

Of these, tetramethylethylenediamine (TMEDA) is most preferred from a commercial point of view.

The above-mentioned amines may be used individually or, if desired, in combination. Further, these amines may be used in combination with other types of complexing agents. In combining the amines and other types of complexing agents, an appropriate combination is selected depending on the reaction conditions, so that the cation of the Group IA metal of the organometallic compound is most effectively protected.

A complex which is the polymerization catalyst to be used in the production of the polymer of the present invention is obtained by the reaction of an organometallic compound containing a Group IA metal with an amine. The

synthesis can be conducted by conventional techniques.

Examples of such conventional techniques include a method of dissolving the organometallic compound in an organic solvent in an atmosphere of an inert gas, and adding thereto a solution of an amine in an organic solvent; and a method of dissolving an amine in an organic solvent in an atmosphere of an inert gas, and adding thereto a solution of an organometallic compound in an organic solvent. From these methods, a preferable method can be appropriately selected.

In the preparation of a complex from a Group IA metal-containing organometallic compound and an amine, which complex is the most preferable polymerization catalyst to be used in the polymerization method for obtaining a cyclic conjugated diene polymer as the most preferred starting material for producing the polymer of the present invention, it is preferred to employ the following molar ratio with respect to the amine and the Group IA metal contained in the organometallic compound. The molar ratio is:

$$M_1/M_2 = 1000/1 \text{ to } 1/1000$$

preferably:

$$M_1/M_2 = 100/1 \text{ to } 1/100,$$

more preferably:

$$M_1/M_2 = 60/1 \text{ to } 1/60,$$

still more preferably:

$$M_1/M_2 = 50/1 \text{ to } 1/50,$$

furthermore preferably:

$$M_1/M_2 = 30/1 \text{ to } 1/30,$$

most preferably:

$$M_1/M_2 = 20/1 \text{ to } 1/20.$$

wherein $M_1$ is the molar amount of the amine, and $M_2$ is the molar amount of the Group IA metal contained in the organometallic compound.

When the above mentioned molar ratio $M_1/M_2$ is within the range as defined above, a polymer or a copolymer can be obtained in high yield.

When the molar ratio $M_1/M_2$ is outside the range as defined above, various disadvantages are likely to be caused in that the production process for the complex becomes costly, and the complex becomes unstable, so that concurrently with the polymerization reaction, an undesirable side reaction, such as a transfer reaction or a reaction of elimination of a hydride of the Group IA metal, is likely to occur.

For self-maintaining the stable complex structure of the polymerization catalyst, it is most preferred that a polymerization catalyst to be used in the present invention, which comprises, as a polymerization active species, a binuclear or multinuclear complex of an organometallic compound containing a Group IA metal, be prepared prior to the initiation of the polymerization reaction; namely, before cyclic conjugated diene monomers are added to the reaction system.

When the complexing agent used in preparing the above-mentioned polymerization catalyst to be used in the present invention is a tert-amine, a preferred form of the binuclear or multinuclear complex has a structure which can be represented, for example, by the following formula (VII):

$$[(G)_g \cdot (J)_j]_k \quad (VII)$$

wherein G represents at least one type of organometallic compound containing a Group IA metal; J represents at least one type of tert-amine; k is an integer of 1 or more; and when k is 1, g is an integer of 2 or more and j is an integer of 1 or more, and when k is an integer of 2 or more, each of g and j is an integer of 1 or more.

Representative examples of polymerization catalysts to be used in the present invention include a complex comprising an amine and an organolithium compound, in which the molar ratio of the amine to the organolithium compound is 1/4. More specific examples of polymerization catalysts to be used in the present invention include a complex comprising an amine and an organolithium compound selected from the group consisting of methyllithium, ethyllithium, n-butyllithium, sec-butyllithium and tert-butyllithium in which the molar ratio of the amine to the organolithium compound is 1/4.

From a commercial point of view, it is most preferred that the polymerization catalyst used in the present invention be a multinuclear complex comprising TMEDA and n-butyllithium (n-BuLi), in which the molar ratio of TMEDA to n-BuLi is 1/4.

The monomers to be polymerized in the above-mentioned polymerization step (1) of the production method of the present invention include not only cyclic conjugated diene monomers, but also other monomers which can be polymerized by anionic polymerization.

Examples of monomers other than the cyclic conjugated diene monomers include chain conjugated diene monomers, such as 1,3-butadiene, isoprene, 2,3-dimethyl-1,3-butadiene, 1,3-pentadiene, and 1,3-hexadiene; vinyl aromatic monomers, such as styrene, α-methylstyrene, o-methylstyrene, p-methylstyrene, p-tert-butylstyrene, 2,4-dimethylstyrene, divinylbenzene, vinylnaphthalene, diphenylethylene, and vinylpyridine The above-mentioned monomers may be used individually or, if desired, in combination.

The configuration of a polymer to be synthesized in polymerization step (1) of the production method of the present invention may be appropriately selected. Examples of polymer configurations include a homopolymer; a block copolymer, such as a diblock, a triblock, a tetrablock, a multiblock, a radial block, a star block, or a comb block copolymer; and a taper copolymer.

Examples of polymerization methods include a gaseous phase polymerization, a bulk polymerization, or a solution polymerization. Further, the polymerization reactions can be conducted in various manners, such as a batchwise, a semi-batchwise or a continuous manner.

For performing the polymerization reaction, the polymerization catalyst to be used in the present invention may be used individually or in combination with other types of polymerization catalyst. Further, if desired, the polymerization catalyst to be used in the present invention may be supported by an inorganic compound, such as silica or a zeolite.

In the polymerization method of the present invention, the polymerization of a cyclic conjugated diene polymer in step (1) can be conducted preferably by bulk polymerization or solution polymerization in the presence of a polymerization catalyst, namely, a complex of a Group IA metal-containing organometallic compound with a complexing agent.

Examples of polymerization solvents to be used in the solution polymerization reaction include aliphatic hydrocarbons, such as butane, n-pentane, n-hexane, n-heptane, n-octane, iso-octane, n-nonane, and n-decane; alicyclic hydrocarbons, such as cyclopentane, methylcyclopentane, cyclohexane, methylcyclohexane, ethylcyclohexane, cycloheptane, cyclooctane, decalin, and norbornane; aromatic hydrocarbons, such as benzene, toluene, xylene, ethylbenzene and cumene; and ethers, such as diethyl ether and tetrahydrofuran.

These polymerization solvents may be used individually or, if desired, in combination.

In the polymerization method of the present invention, the amount of the polymerization catalyst may vary depending on the intended use of the polymer to be used. However, the polymerization catalyst is generally used in an amount of from $1 \times 10^{-6}$mol to $1 \times 10^{-1}$mol, preferably from $5 \times 10^{-6}$mol to $5 \times 10^{-2}$mol, in terms of the molar amount of metal atom per mol of the monomer or monomers.

In the polymerization method of the present invention, the polymerization reaction temperature may vary according to the other polymerization reaction conditions. However, the polymerization reaction temperature is generally from -100 to 150 °C, preferably from -80 to 120 °C, more preferably from -30 to 110 °C, and most preferably from 0 to 100 °C. From a commercial point of view, it is advantageous that the polymerization reaction temperature be from room temperature to 80 °C.

In the polymerization method of the present invention, the polymerization reaction time may vary depending on the intended use of the polymer and the other polymerization reaction conditions. However, the polymerization reaction time is generally not longer than 48 hours, preferably from 1 to 10 hours. Further, it is preferred that the polymerization reaction be conducted in an atmosphere of an inert gas, such as nitrogen, argon or helium. It is especially

preferred that such an inert gas be used after being well dried.

With respect to the pressure in the polymerization reaction system, a widely varied pressure can be chosen as long as the pressure is sufficient to maintain the monomer or monomers and the solvent at a liquid state at a polymerization temperature within the above-mentioned range. Further, care must be taken to prevent the intrusion of impurities, which deactivate a polymerization catalyst or the active terminals of the polymer being formed, such as water, oxygen and carbon dioxide, into the polymerization reaction system.

In the polymerization method of the present invention for producing a cyclic conjugated diene polymer, it is preferred that a partial or entire amount of each of the components for the catalyst be subjected to a preliminary reaction to each other (and, optionally aging) to synthesize a complex to be used as the polymerization catalyst prior to the initiation of the polymerization reaction.

Particularly, in the polymerization method of the present invention, it is most preferred that the complex be formed prior to the addition of the cyclic conjugated diene monomer to the reaction system.

When the complex is formed prior to the addition of the cyclic conjugated diene monomer to the reaction system, various advantages are achieved such that occurrence of side reactions is suppressed, that the polymerization activity of the catalyst is improved, and that the polymer obtained has a narrow molecular weight distribution.

In the polymerization method of the present invention, the above-mentioned catalysts may be used individually or, if desired, in combination.

With respect to the polymerization terminator, any conventional polymerization terminator can be used as long as it can deactivate the polymerization activating species of the polymerization catalyst to be used in the present invention. Preferable examples of polymerization terminators include water, a $C_1$-$C_{10}$ alcohol, a ketone, a polyhydric alcohol (such as ethylene glycol, propylene glycol, or glycerol), a phenol, a carboxylic acid, and a halogenated hydrocarbon.

The amount of the polymerization terminator to be added is generally within the range of from 0.001 to 10 parts by weight per 100 parts by weight of the cyclic conjugated diene polymer. Alternatively, the active terminals of the polymer may be deactivated by contacting the active terminals with a molecular hydrogen.

The polymer of the present invention can be obtained by subjecting a cyclic conjugated diene polymer to an addition reaction after a predetermined polymerization degree has been reached in the polymerization reaction for obtaining the cyclic conjugated diene polymer.

In the present invention, an addition reaction is performed at a carbon-to-carbon double bond of a cyclic conjugated diene monomer unit, using conventional techniques. Examples of such addition reactions include an addition of hydrogen (hydrogenation), an addition of a halogen (halogenation), an addition of a hydrogen halogenide (hydrohalogenation), an addition of sulfuric acid (sulfonation), an addition of water (hydration), an addition of a halohydrin (halohydrination), an addition of an alkyl group (alkylation), an addition of an aryl group (arylation), and an addition of oxygen or a hydroxyl group (oxidation).

Of these, preferred are hydrogenation, halogenation and alkylation. Hydrogenation and halogenation are more preferred.

In the present invention, the most preferable addition reaction is an addition reaction of hydrogen to the carbon-to-carbon double bonds, namely, hydrogenation.

The addition reaction of the present invention can be conducted by conventional techniques.

For example, the addition reaction can be batchwise conducted by employing a method which comprises stopping a polymerization reaction by deactivating a polymerization catalyst, adding an addition reaction catalyst (such as a hydrogenation catalyst or a halogenation catalyst) to the same reactor as used in the polymerization reaction, and charging hydrogen or halogen to the reactor, to thereby obtain a polymer of the present invention.

The addition reaction can also be semi-batchwise conducted, by employing a method which comprises stopping a polymerization reaction by deactivating a polymerization catalyst, to thereby obtain a polymer solution, transferring the obtained polymer solution to a reactor other than that used in the polymerization reaction, adding an addition reaction catalyst (such as a hydrogenation catalyst or a halogenation catalyst) to the reactor, and charging hydrogen or halogen to the reactor, to thereby obtain a polymer of the present invention.

The addition reaction can also be continuously conducted, by employing a method which comprises continuously conducting a polymerization reaction and the addition reaction in a tubular reactor, to thereby obtain a polymer of the present invention.

From the above-mentioned methods, a desirable method can be appropriately selected.

With respect to the polymer of the present invention which is obtained by subjecting a cyclic conjugated diene polymer to an addition reaction to saturate the double bonds in the polymer, the degree of saturation, which is defined as the ratio (mole %) of saturation of the carbon-to-carbon double bonds contained in the cyclic conjugated diene monomer units in the cyclic conjugated diene polymer, may vary depending on the amount of saturated cyclic molecular unit required for the polymer according to the intended use thereof. However, the degree of saturation is within the range of from 0.1 to 100 mole %, preferably from 1 to 100 mole %, more preferably from 5 to 100 mole %, especially

preferably from 10 to 100 mole %, most preferably from 20 to 100 mole %, based on the total number of moles of the carbon-to-carbon double bonds in the original cyclic conjugated diene polymer.

Further, especially when the polymer of the present invention is for use in a field where the polymer is required to have high thermal and mechanical properties, it is recommended that the degree of saturation be within the range of from 50 to 100 mole %, more preferably from 70 to 100 mole %, most preferably 90 mole % or more.

Among the polymers of the present invention, most preferred are those which are obtained by conducting a polymerization reaction for obtaining a cyclic conjugated diene polymer until a predetermined degree of polymerization has been reached, and then subjecting the obtained cyclic conjugated diene polymer to a hydrogenation reaction to saturate the double bonds in the polymer.

Such a polymer of the present invention which has been obtained by subjecting a cyclic conjugated diene polymer to a hydrogenation reaction to saturate the double bonds in the polymer, is most preferable from the viewpoint of thermal and mechanical properties.

With respect to the polymer of the present invention which is obtained by subjecting a cyclic conjugated diene polymer to a hydrogenation reaction to saturate the double bonds in the polymer, the degree of hydrogenation, which is defined as the ratio (mole %) of hydrogenation of the carbon-to-carbon double bonds contained in the cyclic conjugated diene monomer units in the cyclic conjugated diene polymer, may vary depending on the amount of saturated cyclic molecular unit required for the polymer according to the intended use thereof. However, the degree of hydrogenation is generally within the range of from 0.1 to 100 mole %, preferably from 1 to 100 mole %, more preferably from 5 to 100 mole %, still more preferably from 10 to 100 mole %, most preferably from 20 to 100 mole %, based on the total number of moles of the carbon-to-carbon double bonds in the original cyclic conjugated polymer.

Further, especially when the polymer of the present invention is for the use in a field where the polymer is required to have high thermal and mechanical properties, it is recommended that the degree of hydrogenation be within the range of from 50 to 100 mole %, more preferably from 70 to 100 mole %, most preferably from 90 to 100 mole %.

When the polymer of the present invention is a partially hydrogenated polymer in which a carbon-to-carbon double bond remains unhydrogenated, the carbon-to-carbon double bond can be a site for a chemical reaction with a crosslinking agent or a compound having a functional group.

That is, the carbon-to-carbon double bond remaining unhydrogenated in the polymer can be advantageously utilized as a reaction site for bonding the polymer to a crosslinking agent or a compound having a functional group, so that the polymer can be imparted with desired properties.

The hydrogenation reaction of a cyclic conjugated diene polymer for obtaining the polymer of the present invention is conducted in an atmosphere of hydrogen gas in the presence of hydrogenation catalyst.

In the present invention, the hydrogenation reaction is generally conducted by a method in which a polymer solution is maintained at a predetermined temperature in an atmosphere of hydrogen gas or an inert gas, and a hydrogenation catalyst is added to the polymer solution while agitating or not agitating, followed by introduction of hydrogen gas into the reaction system until a predetermined level of pressure is reached.

The hydrogenation reaction can be conducted in a conventional manner, namely, in a batchwise, a semi-batchwise or a continuous manner. These manners can be employed individually or in combination.

It is preferred that the hydrogenation catalyst to be used in the present invention be a homogeneous or heterogeneous hydrogenation catalyst which contains at least one member selected from the group consisting of metals belonging to Groups IV A to VIII of the Periodic Table and rare earth metals. It is more preferred that the hydrogenation catalyst be a homogeneous hydrogenation catalyst, i.e., an organometallic compound or complex, which contains at least one member selected from the group consisting of Group IV A to VIII metals and rare earth metals, and which is soluble in a solvent used for hydrogenation. Of these, especially preferred is an organometallic compound or complex, which contains a Group IV A metal or a Group VIII metal.

These organometallic compounds or complexes as a hydrogenation catalyst can be supported by an inorganic compound, such as silica, a zeolite or a crosslinked polystyrene, or an organic polymer compound.

Examples of metals contained in the hydrogenation catalyst to be used in the present invention include titanium, zirconium, hafnium, chromium, molybdenum, tungsten, manganese, rhenium, iron, cobalt, nickel, ruthenium, rhodium, palladium, osmium, iridium, platinum, lanthanum, cerium, praseodymium, neodymium, promethium, samarium, europium, gadolinium, terbium, dysprosium, holmium, erbium, thulium, ytterbium and lutetium. Among these, titanium, zirconium, hafnium, rhenium, co balt, nickel, ruthenium, rhodium, palladium, cerium, neodymium, samarium, europium, gadolinium and ytterbium are preferred.

From a commercial point of view, titanium, cobalt, nickel, ruthenium, rhodium and palladium are especially preferred.

In the present invention, titanium, cobalt and ruthenium are commercially most preferred.

In order for organometallic compounds or complexes, which contain the above-mentioned metals, to be soluble in a solvent used, it is a requisite that a ligand, such as hydrogen, a halogen, a nitrogen compound or an organic compound, be coordinated with or bonded to such metals. These ligands can be used individually or in combination.

When these ligands are used in combination, it is preferred that an appropriate combination of ligands be selected so that the resultant organometallic compound or complex becomes soluble in the solvent used.

Examples of ligands include hydrogen; fluorine; chlorine; bromine; nitrogen monoxide; carbon monoxide; an organic compound containing a functional group, such as a hydroxyl group, an ether group, an amine group, a thiol group, a phosphine group, a carbonyl group, an olefin group or a diene group, or a non-polar organic compound containing no functional group.

The above-mentioned metal compounds or complexes as hydrogenation catalysts can be used individually or in combination.

The amount of hydrogenation catalyst may vary depending on the hydrogenation reaction conditions. However, the amount of hydrogenation catalyst is generally within the range of from 1 to 50,000 ppm, preferably from 5 to 10,000 ppm, more preferably from 10 to 5,000 ppm, most preferably from 15 to 1,000 ppm, in terms of the amount of metal, based on the amount of the polymer to be hydrogenated.

When the amount of hydrogenation catalyst is smaller than the above-mentioned range, the rate of hydrogenation reaction becomes disadvantageously low. When the amount of hydrogenation catalyst is larger than the above-mentioned range, the rate of hydrogenation reaction becomes high but the separation and recovery of the hydrogenation catalyst become difficult, which is disadvantageous from an economical point of view.

In the hydrogenation reaction, it is preferred that the above-mentioned hydrogenation catalyst be used in combination with an organometallic compound containing a metal selected from those metals belonging to Group IA to IIIA of the Periodic Table, such as alkyllithium, alkylmagnesium and alkylaluminum.

With respect to further details of hydrogenation catalysts usable in the present invention, which comprise an organometallic compound or complex, reference can be made to, for example, J. Am. Chem. Soc., 85, 4014 (1963).

As solvents to be used for a hydrogenation reaction, it is preferred to use solvents which are not only inert to a hydrogenation catalyst, but also capable of dissolving therein the polymer to be hydrogenated and the hydrogenation catalyst.

Examples of solvents include aliphatic hydrocarbons, such as n-pentane, n-hexane, n-heptane, n-octane, iso-octane, n-nonane, and n-decane; alicyclic hydrocarbons, such as cyclopentane, methylcyclopentane, cyclohexane, methylcyclohexane, cycloheptane, cyclooctane, decalin, and norbornane; aromatic hydrocarbons, such as benzene, toluene, xylene, ethylbenzene and cumene; halogenated hydrocarbons, such as methylene chloride, dichloroethane, chlorobenzene, dichlorobenzene and trichlorobenzene; and ethers, such as diethyl ether and tetrahydrofuran. These solvents may be used individually or in combination. Suitable solvents can be appropriately selected, depending on the properties of the polymer to be hydrogenated or the hydrogenation reaction conditions.

From a commercial point of view, it is preferred that the polymerization reaction and the hydrogenation reaction be consecutively conducted. Therefore, it is preferred that the solvent to be used for the hydrogenation reaction be the same as the solvent used for the polymerization reaction.

In the present invention, the concentration of a polymer solution to be subjected to hydrogenation reaction is preferably from 1 to 90 wt%, more preferably from 2 to 60 wt%, most preferably from 5 to 40 wt%.

When the concentration of the polymer solution is lower than the above-mentioned range, the operation for hydrogenation reaction becomes inefficient and disadvantageous from an economic point of view. On the other hand, when the concentration of the polymer solution is higher than the above-mentioned range, the viscosity of the polymer solution becomes high, leading to a lowering of the reaction rate.

In the present invention, the reaction temperature for hydrogenation is generally from 0 to 300 °C, preferably from 20 to 250 °C, more preferably from 30 to 200 °C.

When the reaction temperature is lower than the above-mentioned range, a satisfactorily high reaction rate cannot be achieved. On the other hand, when the reaction temperature is higher than the above-mentioned range, disadvantages are likely to be caused such that not only is the hydrogenation catalyst deactivated, but also the polymer is deteriorated.

The pressure of the hydrogenation reaction system is generally from 0.1993 to 24.6013 MPa (1 to 250 kg/$cm^2$G), preferably from 0.2973 to 19.7013 MPa (2 to 200 kg/$cm^2$G), more preferably from 0.5913 to 14.8013 MPa (5 to 150 kg/$cm^2$G).

When the pressure of the hydrogenation reaction system is lower than the above-mentioned range, a satisfactorily high reaction rate cannot be achieved. When the pressure is higher than the above-mentioned range, the reaction rate becomes high, but an expensive pressure-resistant reaction apparatus is required, which is economically disadvantageous. Further, such a high pressure may cause a hydrocracking of the polymer during the hydrogenation reaction.

The reaction time for hydrogenation may vary depending on the concentration of the polymer solution, and the temperature of and pressure of the reaction system. However, the reaction time for hydrogenation is generally from 5 minutes to 240 hours.

If desired, after completion of the hydrogenation reaction, the hydrogenation catalyst can be recovered from

the resultant hydrogenation reaction mixture by a conventional method, such as adsorption-separation of the catalyst by means of an adsorbent, or removal of the catalyst by washing with water or a lower alcohol in the presence of an organic acid and/or an inorganic acid.

The separation and recovery of the polymer of the present invention from the hydrogenation reaction mixture can be conducted by a conventional method which is generally used for recovering a conventional polymer from a polymerization reaction mixture.

Examples of such conventional methods include a steam-coagulation method comprising directly contacting a polymerization reaction mixture with steam; a method comprising adding a poor solvent for a polymer to a polymerization reaction mixture, thereby precipitating the polymer; a method comprising heating a polymerization reaction mixture in a polymerization reactor, thereby distilling off the solvent; and a method comprising extruding a polymerization reaction mixture using an extruder having a vent, while distilling off a solvent through the vent, thereby obtaining a pelletized polymer. A most suitable method can be selected depending on the properties of the solvent used and the polymer to be obtained.

The polymer of the present invention may, if desired, be modified or crosslinked by adding a polar group thereto by conventional techniques. Examples of such polar groups include a carboxyl group (derived from maleic anhydride, itaconic anhydride, citraconic anhydride, acrylic acid or methacrylic acid), a hydroxyl group, an epoxy group (derived from glycidyl methacrylate or glycidyl acrylate), an amino group (derived from maleimide), an oxazoline group, an alkoxy group (derived from a vinyl compound containing an alkoxysilane group), and an isocyanate group.

Further, in the present invention, additives which are used in conventional polymer materials can be used depending on the intended use of the polymer. Examples of such additives include a thermal stabilizer, an antioxidant, an ultraviolet absorbing agent, a lubricant, a nucleator, a coloring agent, a pigment, a crosslinking agent, a foaming agent, an antistatic agent, an anti-slip agent, an antiblocking agent, a mold-release agent, another polymer material, and an inorganic reinforcing material.

The polymer of the present invention may be in a single form, or in a composite form with another polymer material, an inorganic reinforcing material or an organic reinforcing material, depending on the intended use of the polymer.

When the polymer of the present invention is intended to be used in a composite form with another polymer material, such another polymer material may be appropriately selected from conventionally known organic polymers.

Examples of such organic polymers include aliphatic polyamides, such as nylon 4, nylon 6, nylon 8, nylon 9, nylon 10, nylon 11, nylon 12, nylon 46, nylon 66, nylon 610, nylon 612, nylon 636 and nylon 1212; partially aromatic polyamides, such as nylon 4T (T: terephthalic acid), nylon 4I (I: isophthalic acid), nylon 6T, nylon 6I, nylon 12T, nylon 12I and nylon MXD6 (MXD: m-xylylenediamine); amide polymers, such as a copolymer or a blend of the above-mentioned aliphatic polyamides or partially aromatic polyamides; polyesters, such as a polybutylene terephthalate (PBT), a polyethylene terephthalate (PET), a polycarbonate (PC) and a polyarylate (PAR); olefin polymers, such as a polypropylene (PP), a polyethylene (PE), an ethylene-propylene rubber (EPR) and a polystyrene (PSt); conjugated diene polymers, such as a polybutadiene (PBd), a polyisoprene (PIp), a styrene-butadiene rubber (SBR), or a hydride thereof; thiol polymers, such as a polyphenylene sulfide (PPS); ether polymers, such as a polyacetal [e.g. polyoxymethylene (POM)] and a polyphenylene ether (PPE); acrylic resins; ABS resins; AS resins; polysulfones (PSF); polyether ketones (PEK) and polyamideimides (PAI).

These organic polymers may be used individually or, if desired, in the form of a mixture or copolymer thereof.

Examples of inorganic reinforcing materials include a glass fiber, a glass wool, a carbon fiber, talc, a mica, wollastonite, kaoline, a montmorillonite, a titanium whisker and a rock wool. Examples of organic reinforcing materials include an aramide, a polyimide, a liquid crystal polyester (LCP), a polybenzoimidazole and a polybenzothiazole.

The polymer of the present invention can be used as an excellent industrial material, such as a thermoplastic resin. Further, if desired, a crosslinking agent may be added to the polymer of the present invention to provide a hardening resin, such as a thermo-hardening resin, an ultraviolet-hardening resin, or an electron radiation-hardening resin.

## BEST MODE FOR CARRYING OUT THE INVENTION

Hereinbelow, the present invention will be described in more detail with reference to the following Reference Examples, Examples and Comparative Examples.

In the Reference Examples, Examples and Comparative Examples, with respect to chemicals, those which have most high purity among the commercially available ones were used. With respect to solvents, commercially available solvents were treated by a conventional method before use. That is, the solvents were degassed, dehydrated under reflux over an activated metal in an atmosphere of an inert gas, and purified by distillation.

With respect to measurement of the number average molecular weight of a polymer, the polymer was dissolved in 1,2,4-trichlorobenzene, and the resultant solution was subjected to gel permeation chromatography (GPC), to obtain

the number average molecular weight, using a calibration curve obtained from a standard polystyrene. Examples of GPC apparatus include one which is manufactured and sold by Waters Assoc. Co., U.S.A.

Reference Example 1

(Preparation of polymerization catalysts for use in synthesis of cyclic conjugated diene polymers, which catalysts are complexes of an organometallic compound containing a Group IA metal)

In an atmosphere of dried argon gas, tetramethylethylenediamine (TMEDA) was dissolved in cyclohexane, to thereby obtain a 1.6 moles/liter solution of TMEDA in cyclohexane. The resultant solution was cooled to and maintained at -10 °C. Then, in an atmosphere of dried argon gas, an n-hexane solution of n-butyllithium (n-BuLi) was gradually, dropwise added to the cyclohexane solution of TMEDA. With respect to the amount relationships between TMEDA and n-BuLi, those which give TMEDA / n-BuLi molar ratios described in Reference Examples 2 to 7 were individually used. After the initiation of addition of the n-hexane solution of n-BuLi, the resultant mixture was cooled to -78 °C. As a result, a complex was obtained in the form of white crystals. Thus, polymerization catalysts to be used in Reference Examples 2 to 7 were obtained.

Reference Example 2

(Synthesis of a cyclic conjugated diene homopolymer as a starting material for the polymer of the present invention)

A well-dried 100 ml pressure-resistant glass bottle, provided with a sealing cap, was purged with dried argon gas by a conventional method. 5.00 g of 1,3-cyclohexadiene and 5.00 g of toluene were charged in the glass bottle. Then, a polymerization catalyst prepared in Reference Example 1, in which the TMEDA/n-BuLi molar ratio was 1/1, was added to the resultant toluene solution of 1,3-cyclohexadiene in an amount of 0.080 mmol in terms of the amount of lithium atom, and a polymerization reaction was conducted at room temperature for 5 hours. After that period of time, a 10 wt% solution of BHT [2,6-bis(tert-butyl)-4-methylphenol] in methanol was added to the polymerization reaction system, to thereby terminate the polymerization reaction. Then, a large amount of a mixed solvent of methanol and hydrochloric acid was added to the resultant polymerization reaction mixture, thereby separating a polymer formed therein. The separated polymer was washed with methanol and then, dried at 80 °C in vacuo, thereby obtaining a final white mass of the polymer.

The yield of the obtained polymer was 96.5 % based on the amount of 1,3-cyclohexadiene charged in the glass bottle. The number average molecular weight of the obtained polymer was 49,800. The $\overline{Mw}/\overline{Mn}$ ratio (weight average molecular weight/number average molecular weight: criterion for molecular weight distribution) was 1.51.

The glass transition temperature (Tg) of the obtained polymer was 89 °C as measured in accordance with the DSC (differential scanning calorimeter) method.

Reference Example 3

(Synthesis of a cyclic conjugated diene homopolymer as a starting material for the polymer of the present invention)

Substantially the same procedure as in Reference Example 2 was repeated, except that the amount of a polymerization catalyst was changed to 0.040 mmol in terms of the amount of lithium atom, to thereby obtain a polymer.

The yield of the obtained polymer was 98.5 %. The number average molecular weight of the obtained polymer was 64,300. The $\overline{Mw}/\overline{Mn}$ ratio (criterion for molecular weight distribution) was 1.48.

The glass transition temperature (Tg) of the obtained polymer was 89 °C as measured in accordance with the DSC method.

Reference Example 4

(Synthesis of a cyclic conjugated diene homopolymer as a starting material for the polymer of the present invention)

Substantially the same procedure as in Reference Example 2 was repeated, except that a polymerization catalyst prepared in Reference Example 1, in which the TMEDA/n-BuLi molar ratio was 1/4, was used, and 10.0 g of cyclohexane was used as a polymerization solvent instead of the toluene.

The yield of the obtained polymer was 98.9 %. The number average molecular weight of the obtained polymer was 121,800. The $\overline{Mw}/\overline{Mn}$ ratio (criterion for molecular weight distribution) was 1.14.

The glass transition temperature (Tg) of the obtained polymer was 89 °C as measured in accordance with

the DSC method. The polymer was subjected to injection molding at a cylinder temperature of 300 °C, to thereby obtain a colorless transparent test specimen having a thickness of 3 mm.

The tensile modulus (TM) of the test specimen was 4,020 MPa (1 MPa=10.19716 kgf/$cm^2$) as measured in accordance with ASTM D638. The heat distortion temperature (HDT) of the test specimen was 102 °C as measured under a load of 18.6 kgf/$cm^2$ in accordance with ASTM D648.

Reference Example 5

(Synthesis of a cyclic conjugated diene copolymer as a starting material for the polymer of the present invention)

A well-dried 5-liter high-pressure autoclave having an electromagnetic induction agitator was purged with dried nitrogen gas by a conventional method.

2,400 g of cyclohexane and 400 g of butadiene were charged in the autoclave. Then, a polymerization catalyst prepared in Reference Example 1, in which the TMEDA / n-BuLi molar ratio was 1/4, was added to the cyclohexane solution of butadiene in an amount of 25.6 mmol in terms of the amount of lithium atom, and a polymerization reaction was conducted at 60 °C for 1 hour. Subsequently, 400 g of 1,3-cyclohexadiene was added to the resultant polymerization reaction mixture, and a polymerization reaction was further conducted at 40 °C for 6 hours. After that period of time, a 10 wt% solution of BHT [2,6-bis(tert-butyl)-4-methylphenol] in methanol was added to the resultant polymerization reaction mixture, to thereby terminate the polymerization reaction. Then, a large amount of a mixed solvent of methanol and hydrochloric acid was added to the resultant polymerization reaction mixture, thereby separating the polymer formed therein. The separated polymer was washed with methanol and then, dried at 80 °C in vacuo, thereby obtaining a final white mass of the copolymer.

With respect to the obtained copolymer, the number average molecular weight was 44,100 as measured by GPC. The obtained chromatogram exhibited a single peak. The $\overline{Mw}/\overline{Mn}$ ratio (criterion for molecular weight distribution) was 1.36.

The polymer chain structure of the copolymer was determined by $^1$H-NMR. As a result, it was confirmed that the polymer chain of the copolymer had substantially the same ratio of monomer units as the ratio of monomers charged in the autoclave.

The glass transition temperature (Tg) of the copolymer on the side of high temperature was 89 °C as measured in accordance with the DSC method.

Reference Example 6

(Synthesis of a cyclic conjugated diene copolymer as a starting material for the polymer of the present invention)

A well-dried 5-liter high-pressure autoclave having an electromagnetic induction agitator was purged with dried nitrogen gas by a conventional method.

2,720 g of cyclohexane and 154 g of 1,3-cyclohexadiene were charged in the autoclave. Then, a polymerization catalyst prepared in Reference Example 1, in which the TMEDA / n-BuLi molar ratio was 1/4, was added to the cyclohexane solution of 1,3-cyclohexadiene in an amount of 15.36 mmol in terms of the amount of lithium atom, and a polymerization reaction was conducted at 40 °C for 5 hours. Subsequently, 326 g of butadiene was added to the resultant polymerization reaction mixture, and a polymerization reaction was further conducted at 60 °C for 1 hour. After completion of the polymerization reaction, 9.60 mmol of dichlorodimethylsilane was added as a coupling agent to the resultant polymerization reaction mixture, and a further reaction was conducted at 65 °C for 1 hour to thereby effect a coupling of the terminals of a polymer formed in the polymerization reaction mixture.

Then, a large amount of a mixed solvent of methanol and hydrochloric acid was added to the resultant polymerization reaction mixture, thereby separating the polymer formed therein. The separated polymer was washed with methanol and then, dried at 80 °C in vacuo, thereby obtaining a final white mass of copolymer.

With respect to the obtained copolymer, the number average molecular weight was 90,700 as measured by GPC. The obtained chromatogram exhibited a single peak. The $\overline{Mw}/\overline{Mn}$ ratio (criterion for molecular weight distribution) was 1.39.

The polymer chain structure of the copolymer was determined by $^1$H-NMR. It was confirmed that the polymer chain of the copolymer had substantially the same ratio of monomer units as the ratio of monomers charged in the autoclave.

The glass transition temperature (Tg) of the copolymer was 89 °C as measured in accordance with the DSC method.

The softening temperature of the copolymer was 149 °C as measured in accordance with the TMA method, in which a 100 μm needle was used, under a load of 50 g.

Reference Example 7

(Synthesis of a cyclic conjugated diene copolymer as a starting material for the polymer of the present invention)

A well-dried 100 ml pressure-resistant glass bottle, provided with a sealing cap, was purged with dried argon gas by a conventional method. 2.50 g of 1,3-cyclohexadiene, 2.50 g of styrene and 10.0 g of cyclohexane were charged in the glass bottle. Then, a polymerization catalyst prepared in Reference Example 1, in which the TMEDA/n-BuLi molar ratio was 1/4, was added to the resultant cyclohexane solution of 1,3-cyclohexadiene and styrene in an amount of 0.08 mmol in terms of the amount of lithium atom, and a polymerization reaction was conducted at room temperature for 4 hours.

After that period of time, a 10 wt% solution of BHT [2,6-bis(tert-butyl)-4-methylphenol] in methanol was added to the polymerization reaction system, to thereby terminate the polymerization reaction. Then, a large amount of a mixed solvent of methanol and hydrochloric acid was added to the resultant polymerization reaction mixture, thereby separating a polymer formed therein. The separated polymer was washed with methanol and then, dried at 80 °C in vacuo, thereby obtaining a final white mass of copolymer.

The yield of the obtained copolymer was 74.8 %. The number average molecular weight of the obtained copolymer was 37,100 as measured by GPC. The obtained chromatogram exhibited a single peak. The $\overline{Mw}/\overline{Mn}$ ratio (criterion for molecular weight distribution) was 1.53.

The polymer chain structure of the copolymer was determined by $^1$H-NMR. It was confirmed that the polymer chain of the obtained copolymer had a structural composition corresponding to the molar ratio (1/3.4) of the cyclohexadiene monomers/styrene monomers charged in the glass bottle.

The glass transition temperature (Tg) was 89 °C as measured in accordance with the DSC method.

Example 1

(Production of the polymer of the present invention)

1.0 g of the cyclic conjugated diene homopolymer obtained in Reference Example 2 was charged in a 180 ml high-pressure autoclave having an electromagnetic induction agitator. The autoclave was dried and purged with dried nitrogen gas by a conventional method.

100 ml of cyclohexane was added to the autoclave, and the polymer was dissolved in the cyclohexane by heating and agitating. Subsequently, a catalyst solution, which was prepared by adding 0.30 mmol of $Co(acac)_3$ and 1.80 mmol of triisobutylaluminum to cyclohexane, was added as a hydrogenation catalyst to the resultant polymer solution.

The autoclave was purged with hydrogen gas. The temperature of the autoclave was elevated to 180 °C, and a hydrogenation reaction was conducted under a hydrogen pressure of 1.5713 MPa (15 kg/cm$^2$G) for 4 hours.

The autoclave was cooled to room temperature, and purged with dried nitrogen gas. Then, 10 ml of a 10 wt% solution of BHT [2,6-bis(tert-butyl)-4-methylphenol] in a mixed solvent of methanol and cyclohexane was added to the autoclave, to thereby deactivate the hydrogenation catalyst. Then, a large amount of a mixed solvent of methanol and hydrochloric acid was added to the resultant hydrogenation reaction mixture, thereby separating the polymer. The separated polymer was washed with methanol and then, dried at 80 °C in vacuo, thereby obtaining a hydrogenated polymer.

The degree of hydrogenation of the obtained polymer was 100 % as determined by $^1$H-NMR. The number average molecular weight was 53,400. The $\overline{Mw}/\overline{Mn}$ ratio (criterion for molecular weight distribution) was 1.46.

The glass transition temperature was 219 °C as measured in accordance with the DSC method.

Example 2

(Production of the polymer of the present invention)

Substantially the same procedure as in Example 1 was repeated, except that the hydrogen pressure was changed to 8.4313 MPa (85 kg/cm$^2$G).

The degree of hydrogenation of the obtained polymer was 100 % as determined by $^1$H-NMR. The number average molecular weight was 51,000. The $\overline{Mw}/\overline{Mn}$ ratio (criterion for molecular weight distribution) was 1.39.

The glass transition temperature was 219 °C as measured in accordance with the DSC method.

Example 3

(Production of the polymer of the present invention)

Substantially the same procedure as in Example 1 was repeated, except that 10.0 g of the polymer obtained in Reference Example 2 was used, and that the hydrogen pressure was changed to 1.0813 MPa (10 kg/$cm^2$G).
The degree of hydrogenation of the obtained polymer was 99.6 % as determined by $^1$H-NMR. The number average molecular weight was 53,900. The $\overline{Mw}/\overline{Mn}$ ratio (criterion for molecular weight distribution) was 1.21.
The glass transition temperature was 219 °C as measured in accordance with the DSC method.

Example 4

(Production of the polymer of the present invention)

Substantially the same procedure as in Example 1 was repeated, except that the hydrogen pressure was changed to 4.0213 MPa (40 kg/$cm^2$G).
The degree of hydrogenation of the obtained polymer was 100 % as determined by $^1$H-NMR. The number average molecular weight was 52,400. The $\overline{Mw}/\overline{Mn}$ ratio (criterion for molecular weight distribution) was 1.33.
The glass transition temperature was 219 °C as measured in accordance with the DSC method.

Example 5

(Production of the polymer of the present invention)

Substantially the same procedure as in Example 2 was repeated, except that a hydrogenation catalyst prepared by adding 0.30 mmol of $TiCl_2(Cp)_2$ (Cp: cyclopentadienyl group) and 1.80 mmol of triisobutylaluminum to cyclohexane, was used.
The degree of hydrogenation of the obtained polymer was 90.0 % as determined by $^1$H-NMR. The number average molecular weight was 50,300. The $\overline{Mw}/\overline{Mn}$ ratio (criterion for molecular weight distribution) was 1.43.
The glass transition temperature was 219 °C as measured in accordance with the DSC method.

Example 6

(Production of the polymer of the present invention)

Substantially the same procedure as in Example 2 was repeated, except that $RuHCl(CO)[P(C_2H_5)_3]_3$ was used as the hydrogenation catalyst.
The degree of hydrogenation of the obtained polymer was 92.8 % as determined by $^1$H-NMR. The number average molecular weight was 50,800. The $\overline{Mw}/\overline{Mn}$ ratio (criterion for molecular weight distribution) was 1.41.
The glass transition temperature was 219 °C as measured in accordance with the DSC method.

Example 7

(Production of the polymer of the present invention)

200 g of the cyclic conjugated diene homopolymer obtained in substantially the same manner as in Reference Example 3 was charged in a well-dried 4-liter high-pressure autoclave having an electromagnetic induction agitator. The inside of the autoclave was dried and the autoclave was purged with dried nitrogen gas by a conventional method.
2.5 liters of cyclohexane was added to the autoclave, and the polymer was dissolved in the cyclohexane by heating and agitating. Subsequently, a catalyst solution, which was prepared by adding 0.30 mmol of $Co(acac)_3$ and 1.80 mmol of triisobutylaluminum to cyclohexane, was added as a hydrogenation catalyst to the resultant polymer solution.
The autoclave was purged with hydrogen gas. The temperature of the autoclave was elevated to 180 °C, and then, a hydrogenation reaction was conducted under a hydrogen pressure of 3.0413 MPa (30 kg/$cm^2$G) for 6 hours.
The autoclave was cooled to room temperature, and purged with dried nitrogen gas. Then, 10 ml of a 10 wt% solution of BHT [2,6-bis(tert-butyl)-4-methylphenol] in a mixed solvent of methanol and cyclohexane was added to the autoclave, to thereby deactivate the hydrogenation catalyst. Then, a large amount of a mixed solvent of methanol and hydrochloric acid was added to the resultant hydrogenation reaction mixture, thereby separating a polymer. The separated polymer was washed with methanol and then, dried at 80 °C in vacuo, thereby obtaining a hydrogenated polymer.

The degree of hydrogenation of the obtained polymer was 100 % as determined by $^1$H-NMR. The number average molecular weight was 72,000. The $\overline{Mw}/\overline{Mn}$ ratio (criterion for molecular weight distribution) was 1.32.

The glass transition temperature was 220 °C as measured in accordance with the DSC method.

Example 8

(Production of the polymer of the present invention)

Substantially the same procedure as in Example 1 was repeated, except that the polymer obtained in Reference Example 4 was used.

The degree of hydrogenation of the obtained polymer was 100 % as determined by $^1$H-NMR. The number average molecular weight was 128,500. The $\overline{Mw}/\overline{Mn}$ ratio (criterion for molecular weight distribution) was 1.16.

The glass transition temperature was 222 °C as measured in accordance with the DSC method. The polymer was subjected to injection molding at a cylinder temperature of 320 °C, to thereby obtain a colorless transparent test specimen having a thickness of 3 mmt.

The tensile modulus (TM) of the test specimen was 6,620 MPa (1 MPa=10.19716 kgf/cm$^2$) as measured in accordance with ASTM D638. The heat distortion temperature (HDT) of the test specimen was 182 °C as measured under a load of 1.9241 MPa (18.6 kgf/cm$^2$) in accordance with ASTM D648.

Example 9

(Production of the polymer of the present invention)

Substantially the same procedure as in Example 1 was repeated, except that 1.0 g of the polymer obtained in Reference Example 5 was used.

The degree of hydrogenation of the obtained polymer was 100 % as determined by $^1$H-NMR. The number average molecular weight was 72,100. The $\overline{Mw}/\overline{Mn}$ ratio (criterion for molecular weight distribution) was 1.34.

The glass transition temperature was 220 °C as measured in accordance with the DSC method.

Example 10

(Production of the polymer of the present invention)

Substantially the same procedure as in Example 7 was repeated, except that 60.0 g of the polymer obtained in Reference Example 6 was used, and the amount of cyclohexane was changed to 2 liters.

The degree of hydrogenation of the obtained polymer was 100 % as determined by $^1$H-NMR. The number average molecular weight was 101,800. The $\overline{Mw}/\overline{Mn}$ ratio (criterion for molecular weight distribution) was 1.24.

The glass transition temperature was 220 °C as measured in accordance with the DSC method.

The softening temperature was 238 °C as measured in accordance with the TMA method, in which a 100 μm needle was used, under a load of 50 g.

Example 11

(Production of the polymer of the present invention)

Substantially the same procedure as in Example 1 was repeated, except that 1.0 g of the polymer obtained in Reference Example 7 was used.

The degree of hydrogenation of the obtained polymer was 100 % as determined by $^1$H-NMR. The number average molecular weight was 38,700. The $\overline{Mw}/\overline{Mn}$ ratio (criterion for molecular weight distribution) was 1.35.

The glass transition temperatures were 122 °C and 100 °C as measured in accordance with the DSC method.

Comparative Example 1

Polymerization was conducted in substantially the same manner as in Reference Example 2, except that the amount of the polymerization catalyst was changed to 1.01 mmol in terms of the amount of lithium atom. The yield of an obtained polymer was 99.1 %.

The number average molecular weight of the obtained polymer was 4,700. The $\overline{Mw}/\overline{Mn}$ ratio (criterion for

molecular weight distribution) was 1.12.

The polymer was subjected to a hydrogenation reaction in substantially the same manner as in Example 1, thereby obtaining a final polymer. The degree of hydrogenation of the obtained final polymer was 100 % as determined by $^1$H-NMR. The final polymer was a very brittle oligomer, so that a molded article made of the final polymer was broken when the article was taken out of the mold. Therefore, it was impossible to produce a molded article.

Industrial applicability

The polymer of the present invention has a saturated cyclic molecular unit introduced to the polymeric chain thereof, so that the polymer has not only excellent thermal and mechanical properties, but also a high molecular weight sufficient for the polymer to be used as a molded article, which therefore can be advantageously used in various fields as industrial materials.

The polymer of the present invention can be provided in the form of a copolymer of a saturated cyclic monomer with a comonomer copolymerizable with the saturated cyclic monomer, wherein the content of comonomer and the configuration of copolymer can be appropriately selected so that the copolymer can have desired thermal and mechanical properties. Therefore, the molecular structure of the polymer of the present invention can be appropriately selected, depending on the intended use thereof, so as to obtain the polymer in the form of, for example, a highly heat-resistant plastic, a highly rigid plastic, or a highly heat-resistant elastomer.

Further, the polymer of the present invention can be used singly or, if desired, in composite forms with other resins or inorganic materials, in various uses, for example, as materials for parts for automobiles, electric appliances and electronics; films; sheets; and tubes.

## Claims

1. A polymer containing a saturated cyclic molecular unit, comprising a main chain represented by the following formula (I):

$$[\ \text{-}(A)_a\text{-}\ \text{-}(B)_b\text{-}\ \text{-}(C)_c\text{-}\ \text{-}(D)_d\text{-}\ \text{-}(F)_f\text{-}\ ] \qquad (I)$$

wherein A to D and F are monomer units constituting said main chain in which monomer units A to D and F are arranged in any order, and a to d and f are, respectively, weight percentages of monomer units A to D and F, based on the total weight of monomer units A to D and F;

wherein:

A is selected from the class consisting of cyclic olefin monomer units each being represented by the following formula (IV):

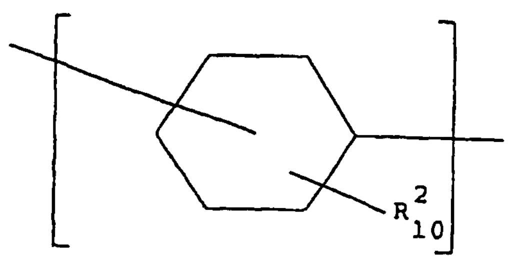

(IV)

wherein each $R^2$ independently represents a hydrogen atom, a halogen atom, a $C_1$-$C_{20}$ alkyl group, a $C_2$-$C_{20}$ unsaturated aliphatic hydrocarbon group, a $C_5$-$C_{20}$ aryl group, a $C_3$-$C_{20}$ cycloalkyl group, $C_4$-$C_{20}$ cyclodienyl group, an epoxy group, a hydroxyl group, a carboxyl group, a sulfonic acid group or a 5 to 10-membered heterocyclic group having at least one nitrogen, oxygen or sulfur atom as a heteroatom,

B is selected from the class consisting of cyclic conjugated diene monomer units each being represented by the following formula (V):

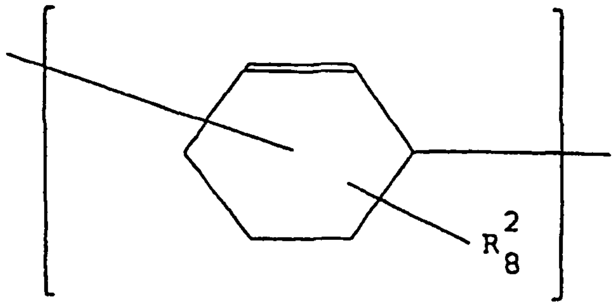

(V)

wherein each $R^2$ is as defined for formula (IV), with the proviso that $R^2$ of formula (V) is exclusive of epoxy group, a hydroxyl group, a carboxyl group and a sulfonic acid group,
C is selected from the class consisting of chain conjugated diene monomer units,
D is selected from the class consisting of vinyl aromatic monomer units, and
F is selected from the class consisting of an ethylene monomer unit and α-olefin monomer units; and

wherein:

a to d and f satisfy the following requirements:

$$a + b + c + d + f = 100,$$

$$0.001 \leq a \leq 100,$$

$$0 \leq b < 100,$$

$$0 \leq c < 100,$$

$$0 \leq d < 100,$$

and

$$0 \leq f < 100,$$

with the proviso that said monomer unit A is present in an amount of from 0.1 to 100 mole %, based on the total number of moles of the monomer units A and B, and that, when $0.001 \leq (a+b) < 100$ and $0.001 \leq a < 100$, said polymer is a block copolymer having at least one polymer block containing at least one A monomer unit, wherein, in said block copolymer, A monomer units are comprised of cyclic olefin monomer units which are the same or different, and said B monomer units are comprised of cyclic conjugated diene monomer units which are the same or different,

said polymer having a number average molecular weight of from 10,000 to 5,000,000 as measured by gel permeation chromatography, using 1,2,4-trichlorobenzene as a solvent and using a calibration curve of a standard polystyrene.

**2.** The polymer according to claim 1, wherein a+b=100 and 0<b, and wherein said A monomer units are comprised of cyclic olefin monomer units which are the same or different, and said B monomer units are comprised of cyclic conjugated diene monomer units which are the same or different.

**3.** The polymer according to claim 1, wherein a=100, and wherein said A monomer units are comprised of cyclic olefin monomer units which are the same or different.

**4.** The polymer according to claim 1, wherein, in said block copolymer, said polymer block consists of A monomer units.

**5.** The polymer according to claim 1, wherein, in said block copolymer, said polymer block further contains at least one B monomer unit.

**6.** The polymer according to claim 1, wherein, in said block copolymer, said polymer block consists of at least one A monomer unit and at least one B monomer unit.

**7.** The polymer according to any one of claims 1 to 6, wherein at least one of said cyclic olefin monomer units A is a cyclohexene monomer unit bonded at the 1- and 4-positions and/or 1- and 2-positions thereof or a derivative thereof, and wherein at least one of said cyclic conjugated diene monomer units B is a 1,3-cyclohexadiene monomer unit or a derivative thereof.

**8.** A method for producing a polymer containing a saturated cyclic molecular unit, comprising a main chain represented by the following formula (I):

$$[\ -(A)_a-\ -(B)_b-\ -(C)_c-\ -(D)_d-\ -(F)_f-\ ] \qquad (I)$$

wherein A to D and F are monomer units constituting said main chain in which monomer units A to D and F are arranged in any order, and a to d and f are, respectively, weight percentages of monomer units A to D and F, based on the total weight of monomer units A to D and F;
wherein:

A is selected from the class consisting of cyclic olefin monomer units each being represented by the following formula (IV):

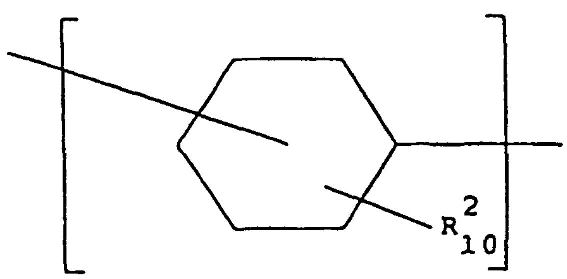

(IV)

wherein each $R^2$ independently represents a hydrogen atom, a halogen atom, a $C_1$-$C_{20}$ alkyl group, a $C_2$-$C_{20}$ unsaturated aliphatic hydrocarbon group, a $C_5$-$C_{20}$ aryl group, a $C_3$-$C_{20}$ cycloalkyl group, $C_4$-$C_{20}$ cyclodienyl group, an epoxy group, a hydroxyl group, a carboxyl group, a sulfonic acid group or a 5 to 10-membered heterocyclic group having at least one nitrogen, oxygen or sulfur atom as a heteroatom,
B is selected from the class consisting of cyclic conjugated diene monomer units each being represented by the following formula (V):

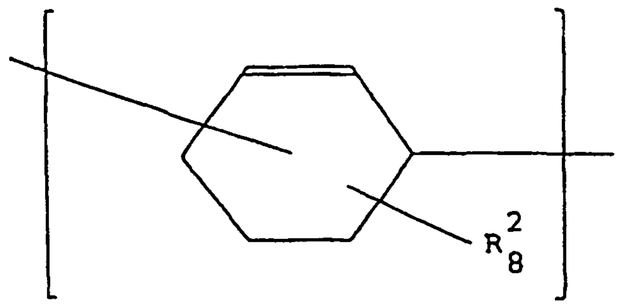

(V)

wherein each $R^2$ is as defined for formula (IV), with the proviso that $R^2$ of formula (V) is exclusive of epoxy group, a hydroxyl group, a carboxyl group and a sulfonic acid group,
C is selected from the class consisting of chain conjugated diene monomer units,
D is selected from the class consisting of vinyl aromatic monomer units, and
F is selected from the class consisting of an ethylene monomer unit and α-olefin monomer units; and

wherein:

a to d and f satisfy the following requirements:

$$a + b + c + d + f = 100,$$

$$0.001 \leq a \leq 100,$$

$$0 \leq b < 100,$$

$$0 \leq c < 100,$$

$$0 \leq d < 100,$$

and

$$0 \leq f < 100,$$

with the proviso that said monomer unit A is present in an amount of from 0.1 to 100 mole %, based on the total number of moles of the monomer units A and B, and that, when $0.001 \leq (a+b) < 100$ and $0.001 \leq a < 100$, said polymer is a block copolymer having at least one polymer block containing at least one A monomer unit, wherein, in said block copolymer, A monomer units are comprised of cyclic olefin monomer units which are the same or different, and said B monomer units are comprised of cyclic conjugated diene monomer units which are the same or different,

said polymer having a number average molecular weight of from 10,000 to 5,000,000 as measured by gel permeation chromatography, using 1,2,4-trichlorobenzene as a solvent and using a calibration curve of a standard polystyrene, which comprises the steps of:

(1) polymerizing at least one six-membered cyclic conjugated diene monomer, or copolymerizing at least one six-membered cyclic conjugated diene monomer and at least one comonomer copolymerizable therewith in the presence of a catalyst comprised of a mononuclear, binuclear or multinuclear complex of an organometallic compound containing a metal belonging to Group IA of the Periodic Table with a complexing agent comprised

of an amine, said six-membered cyclic conjugated diene monomer being capable of producing a monomer unit represented by said formula (V), and said at least one comonomer being selected from the class consisting of chain conjugated diene monomers and vinyl aromatic monomers, thereby obtaining a cyclic conjugated diene polymer comprising a main chain represented by the following formula (I');

$$[ -(B')_{b'} -(C)_{c'} -(D)_{d'} ] \qquad (I')$$

wherein B', C and D are monomer units constituting said main chain of formula (I') in which monomer units B' to D are arranged in any order, and b' to d' are, respectively, weight percentages of monomer units B' to D, based on the total weight of monomer units B' to D;
wherein:

B' has the same meaning as defined for B of formula (I), and C and D, respectively, have the same meanings as defined for formula (I); and

wherein:

b' to d' satisfy the following requirements:

$$b' + c' + d' = 100,$$

$$0.001 \le b' \le 100,$$

$$0 \le c' < 100,$$

and

$$0 \le d' < 100;$$

and
wherein the copolymerization of said at least one conjugated diene monomer and said at least one co-monomer is carried out to obtain a block copolymer; and
(2) subjecting said cyclic conjugated diene polymer or block copolymer to an addition reaction selected from the group consisting of hydrogenation, halogenation, hydrohalogenation, sulfonation, hydration, halohydrination, alkylation, arylation and oxidation, wherein said addition reaction is carried out at a carbon-to-carbon double bond of said B' monomer unit to the extent that 0.1 to 100 mole %, based on the number of moles of said B' monomer unit, of said B' monomer unit are saturated, thereby converting 0.1 to 100 mole % of said B' monomer unit to said A monomer unit.

**9.** The method according to claim 8, wherein said addition reaction in step (2) is a hydrogenation reaction.

**10.** The method according to claim 8 or 9, wherein said catalyst is prepared prior to the polymerization.

**Patentansprüche**

**1.** Polymer, das eine gesättigte, cyclische, molekulare Einheit enthält, umfassend eine Hauptkette, die durch die folgende Formel (I):

$$[ -(A)_a -(B)_b -(C)_c -(D)_d -(F)_f ] \qquad (I)$$

dargestellt wird, in der A bis D und F Monomereinheiten sind, die diese Hauptkette ausmachen, wobei die Monomereinheiten A bis D und F in irgendeiner Reihenfolge angeordnet sind und a bis d und f jeweils Gewichtsprozentgehalte der Monomereinheiten A bis D und F sind, bezogen auf das Gesamtgewicht der Monomereinheiten A bis D und F, wobei

A aus der Klasse ausgewählt ist, bestehend aus cyclischen Olefin-Monomereinheiten, die jeweils durch die folgende Formel (IV)

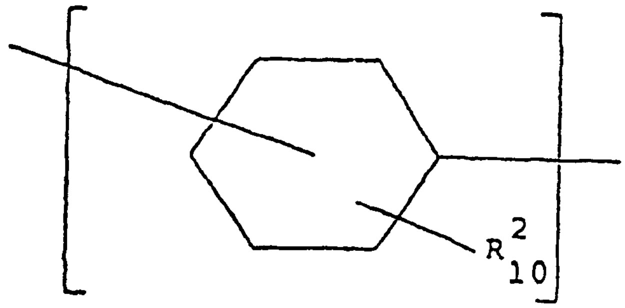

(IV)

dargestellt werden, in der jedes $R^2$ unabhängig ein Wasserstoffatom, ein Halogenatom, eine $C_1$-$C_{20}$-Alkylgruppe, eine ungesättigte aliphatische $C_2$-$C_{20}$-Kohlenwasserstoffgruppe, eine $C_5$-$C_{20}$-Arylgruppe, eine $C_3$-$C_{20}$-Cycloalkylgruppe, eine $C_4$-$C_{20}$-Cyclodienylgruppe, eine Epoxygruppe, eine Hydroxylgruppe, eine Carboxylgruppe, ein Sulfonsäuregruppe oder eine fünfgliedrige bis zehngliedrige heterocyclische Gruppe mit wenigstens einem Stickstoff-, Sauerstoff- oder Schwefelatom als Heteroatom darstellt,

B aus der Klasse ausgewählt ist, bestehend aus cyclischen, konjugierten Dien-Monomereinheiten, die jeweils durch die folgende Formel (V)

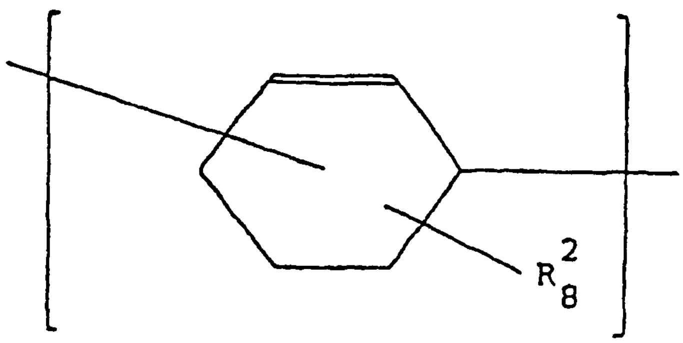

(V)

dargestellt werden, in der $R^2$ wie in der Formel (IV) definiert ist, mit der Maßgabe, dass für $R^2$ der Formel (V) eine Epoxygruppe, eine Hydroxylgruppe, eine Carboxylgruppe und eine Sulfonsäuregruppe ausgeschlossen ist,

C aus der Klasse ausgewählt ist, bestehend aus kettenkonjugierten Dien-Monomereinheiten,

D aus der Klasse ausgewählt ist, bestehend aus vinylaromatischen Monomereinheiten, und

F aus der Klasse ausgewählt ist, bestehend aus einer Ethylen-Monomereinheit und $\alpha$-Olefin-Monomereinheiten, und wobei

a bis d und f den folgenden Anforderungen genügen:

$$a+b+c+d+f = 100,$$

$$0,001 \leq a \leq 100,$$

$$0 \leq b < 100,$$

$$0 \leq c < 100,$$

$$0 \leq d < 100$$

und

$$0 \leq f < 100,$$

mit der Maßgabe, dass die Monomereinheit A in einer Menge von 0,1 - 100 Mol-% vorliegt, bezogen auf die gesamte Stoffmenge der Monomereinheiten A und B, und dass, wenn $0{,}001 \leq (a+b) < 100$ und $0{,}001 \leq a < 100$, das Polymer ein Blockcopolymer ist, das wenigstens einen Polymerblock aufweist, der wenigstens eine A-Monomereinheit enthält, wobei in dem Blockcopolymer A-Monomereinheiten aus cyclischen Olefin-Monomereinheiten bestehen, die einander gleich oder voneinander verschieden sind, und die B-Monomereinheiten aus cyclischen, konjugierten Dien-Monomereinheiten bestehen, die einander gleich oder voneinander verschieden sind,
wobei das Polymer ein Zahlenmittel der Molmasse von 10 000 bis 5 000 000 hat, das durch Gelpermeationschromatographie unter Verwendung von 1,2,4-Trichlorbenzol als Lösungsmittel und unter Verwendung einer Kalibrierungskurve eines Standard-Polystyrols gemessen wurde.

**2.** Polymer gemäß Anspruch 1, wobei $a+b=100$ und $0<b$ und wobei die A-Monomereinheiten aus cyclischen Olefin-Monomereinheiten bestehen, die einander gleich oder voneinander verschieden sind, und die B-Monomereinheiten aus cyclischen, konjugierten Dien-Monomereinheiten bestehen, die einander gleich oder voneinander verschieden sind.

**3.** Polymer gemäß Anspruch 1, wobei $a=100$ und wobei die A-Monomereinheiten aus cyclischen Olefin-Monomereinheiten bestehen, die einander gleich oder voneinander verschieden sind.

**4.** Polymer gemäß Anspruch 1, wobei in dem Blockcopolymer der Polymerblock aus A-Monomereinheiten besteht.

**5.** Polymer gemäß Anspruch 1, wobei in dem Blockcopolymer der Polymerblock weiterhin wenigstens eine B-Monomereinheit enthält.

**6.** Polymer gemäß Anspruch 1, wobei in dem Blockcopolymer der Polymerblock wenigstens aus einer A-Monomereinheit und wenigstens einer B-Monomereinheit besteht.

**7.** Polymer gemäß irgendeinem der Ansprüche 1 bis 6, wobei wenigstens eine der cyclischen Olefin-Monomereinheiten A eine Cyclohexen-Monomereinheit ist, die über ihre 1- und 4-Positionen und/oder 1- und 2-Positionen gebunden ist, oder ein Derivat derselben und wobei wenigstens eines dieser cyclischen konjugierten Dien-Monomereinheiten B eine 1,3-Cyclohexadien-Monomereinheit oder ein Derivat derselben ist.

**8.** Verfahren zur Herstellung eines Polymers, das eine gesättigte, cyclische, molekulare Einheit enthält, umfassend eine Hauptkette, die durch die folgende Formel (I):

$$[\,-(A)_a-\;-(B)_b-\;-(C)_c-\;-(D)_d-\;-(F)_f-\,] \qquad (I)$$

dargestellt wird, in der A bis D und F Monomereinheiten sind, die diese Hauptkette ausmachen, wobei die Monomereinheiten A bis D und F in irgendeiner Reihenfolge angeordnet sind und a bis d und f jeweils Gewichtsprozentgehalte der Monomereinheiten A bis D und F sind, bezogen auf das Gesamtgewicht der Monomereinheiten A bis D und F, wobei

A aus der Klasse ausgewählt ist, bestehend aus cyclischen Olefin-Monomereinheiten, die jeweils durch die folgende Formel (IV)

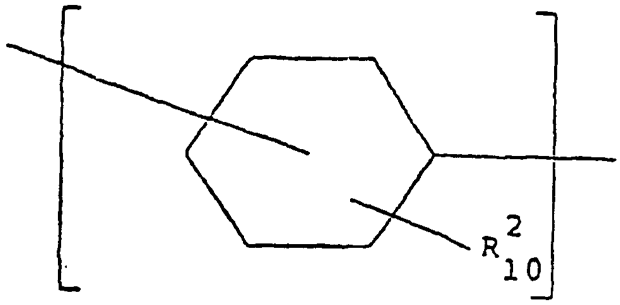

(IV)

dargestellt werden, in der jedes $R^2$ unabhängig ein Wasserstoffatom, ein Halogenatom, eine $C_1$-$C_{20}$-Alkylgruppe, eine ungesättigte aliphatische $C_2$-$C_{20}$-Kohlenwasserstoffgruppe, eine $C_5$-$C_{20}$-Arylgruppe, eine $C_3$-$C_{20}$-Cycloalkylgruppe, eine $C_4$-$C_{20}$-Cyclodienylgruppe, eine Epoxygruppe, eine Hydroxylgruppe, eine Carboxylgruppe, ein Sulfonsäuregruppe oder eine fünfgliedrige bis zehngliedrige heterocyclische Gruppe mit wenigstens einem Stickstoff-, Sauerstoff- oder Schwefelatom als Heteroatom darstellt,

B aus der Klasse ausgewählt ist, bestehend aus cyclischen, konjugierten Dien-Monomereinheiten, die jeweils durch die folgende Formel (V)

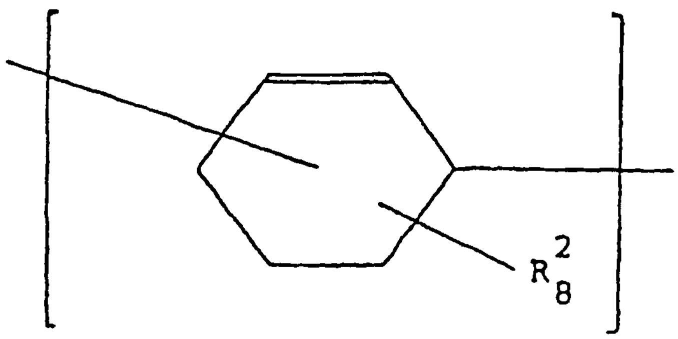

(V)

dargestellt werden, in der jedes $R^2$ wie in der Formel (IV) definiert ist, mit der Maßgabe, dass für $R^2$ der Formel (V) eine Epoxygruppe, eine Hydroxylgruppe, eine Carboxylgruppe und eine Sulfonsäuregruppe ausgeschlossen ist,

C aus der Klasse ausgewählt ist, bestehend aus kettenkonjugierten Dien-Monomereinheiten,

D aus der Klasse ausgewählt ist, bestehend aus vinylaromatischen Monomereinheiten, und

F aus der Klasse ausgewählt ist, bestehend aus einer Ethylen-Monomereinheit und α-Olefin-Monomereinheiten, und wobei

a bis d und f den folgenden Anforderungen genügen:

$$a+b+c+d+f = 100,$$

$$0{,}001 \leq a \leq 100,$$

$$0 \leq b < 100,$$

$$0 \leq c < 100,$$

$$0 \leq d < 100$$

und

$$0 \leq f < 100,$$

mit der Maßgabe, dass die Monomereinheit A in einer Menge von 0,1 - 100 Mol-% vorliegt, bezogen auf die gesamte Stoffmenge der Monomereinheiten A und B, und dass, wenn $0{,}001 \leq (a+b) < 100$ und $0{,}001 \leq a < 100$, das Polymer ein Blockcopolymer ist, das wenigstens einen Polymerblock aufweist, der wenigstens eine A-Monomereinheit enthält, wobei in dem Blockcopolymer A-Monomereinheiten aus cyclischen Olefin-Monomereinheiten bestehen, die einander gleich oder voneinander verschieden sind, und die B-Monomereinheiten aus cyclischen, konjugierten Dien-Monomereinheiten bestehen, die einander gleich oder voneinander verschieden sind,
wobei das Polymer ein Zahlenmittel der Molmasse von 10 000 bis 5 000 000 hat, das durch Gelpermeationschromatographie unter Verwendung von 1,2,4-Trichlorbenzol als Lösungsmittel und unter Verwendung einer Kalibrierungskurve eines Standard-Polystyrols gemessen wurde; wobei das Verfahren die folgenden Schritte umfasst:

(1) die Polymerisation wenigstens eines sechsgliedrigen cyclischen, konjugierten Dien-Monomers oder die Copolymerisation wenigstens eines sechsgliedrigen cyclischen, konjugierten Dien-Monomers und wenigstens eines Comonomers, das mit demselben copolymerisierbar ist, in Gegenwart eines Katalysators, bestehend aus einem einkernigen, zweikernigen oder mehrkernigen Komplex einer metallorganischen Verbindung, die ein Metall enthält, das zur Gruppe IA des Periodensystems gehört, mit einem Komplexbildner, der aus einem Amin besteht, wobei das sechsgliedrige cyclische, konjugierte Dien-Monomer befähigt ist, eine Monomereinheit zu bilden, die durch die Formel (V) dargestellt wird, und das wenigstens eine Comonomer aus der Klasse ausgewählt ist, bestehend aus kettenkonjugierten Dien-Monomeren und vinylaromatischen Monomeren, wodurch ein cyclisches, konjugiertes Dien-Polymer erhalten wird, das eine Hauptkette umfasst, die durch die folgenden Formel (I')

$$[-(B')_{b'} \, -(C)_{c'} \, -(D)_{d'} ] \qquad (I')$$

dargestellt wird, in der B', C und D Monomereinheiten sind, die die Hauptkette der Formel (I') ausmachen, in der die Monomereinheiten B' bis D in irgendeiner Reihenfolge angeordnet sind und b' bis d' jeweils die Gewichtsprozentgehalte der Monomereinheiten B' bis D sind, bezogen auf das Gesamtgewicht der Monomereinheiten B' bis D, wobei

B' die gleiche Bedeutung hat, wie sie für B der Formel (I) definiert wurde, und C bzw. D die gleichen Bedeutungen haben, wie sie für die Formel (I) definiert wurden; und wobei
b' bis d' den folgenden Anforderungen genügen:

$$b'+c'+d'=100$$

$$0{,}001 \leq b' \leq 100$$

$$0 \leq c' < 100$$

und

$$0 \leq d' < 100$$

und wobei
die Copolymerisation des wenigstens einen konjugierten Dien-Monomers und des wenigstens einen Comonomers durchgeführt wird, um ein Blockcopolymer zu erhalten, und
(2) das Durchführen einer Additionsreaktion, die aus der Gruppe ausgewählt ist, bestehend aus Hydrierung, Halogenierung, Hydrohalogenierung, Sulfonierung, Hydratation, Halogenhydrinierung, Alkylierung, Arylierung und Oxidation, mit dem cyclischen, konjugierten Dien-Polymer oder Blockcopolymer, wobei die Additionsreaktion an einer Kohlenstoff-Kohlenstoff-Doppelbindung der B'-Monomereinheit in einem derartigen Maße durchgeführt wird, dass 0,1 - 100 Mol-%, bezogen auf die Stoffmenge der B'-Monomereinheit, der B'-Monomereinheit gesättigt sind, wodurch 0,1 - 100 Mol-% der B'-Monomereinheit in die A-Monomereinheit überführt werden.

**9.** Verfahren gemäß Anspruch 8, wobei die Additionsreaktion im Schritt (2) eine Hydrierungsreaktion ist.

**10.** Verfahren gemäß den Ansprüchen 8 oder 9, wobei der Katalysator vor der Polymerisation hergestellt wird.

## Revendications

**1.** Polymère contenant un motif moléculaire cyclique saturé, comprenant une chaîne principale représentée par la formule (I) suivante :

$$[\ -(A)_a-\ -(B)_b-\ -(C)_c-\ -(D)_d-\ -(F)_f-\ ] \qquad (I)$$

dans laquelle A à D et F sont des motifs de monomère constituant la chaîne principale, dans laquelle des motifs A à D et F de monomère sont disposés dans n'importe quel ordre et a à d et f sont, respectivement, des pourcentages en poids des motifs A à D et F de monomère par rapport au poids total des motifs A à D et F de monomère ;
dans lequel :

A est choisi dans la classe consistant en des motifs de monomère d'oléfine cyclique, chacun étant représenté par la formule (IV) suivante :

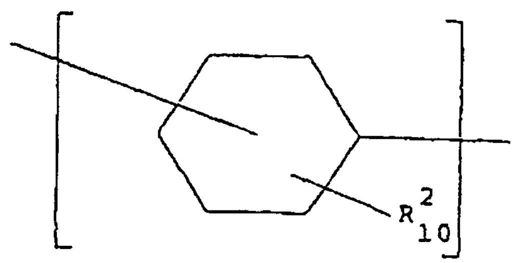

(IV)

dans laquelle chaque $R^2$ représente indépendamment un atome d'hydrogène, un atome d'halogène, un groupe alcoyle ayant de 1 à 20 atomes de carbone, un groupe hydrocarboné aliphatique insaturé ayant de 2 à 20 atomes de carbone, un groupe aryle ayant de 5 à 20 atomes de carbone, un groupe cyclo-alcoyle ayant de 3 à 20 atomes de carbone, un groupe cyclodiényle ayant de 4 à 20 atomes de carbone, un groupe époxy, un groupe hydroxyle, un groupe carboxyle, un groupe acide sulfonique ou un groupe hétérocyclique ayant de 5 à 10 chaînons et ayant au moins un atome d'azote, d'oxygène ou de soufre comme hétéro-atome,
B est choisi dans la classe consistant en des motifs de monomère de diène conjugué cyclique, chacun étant représenté par la formule (V) suivante :

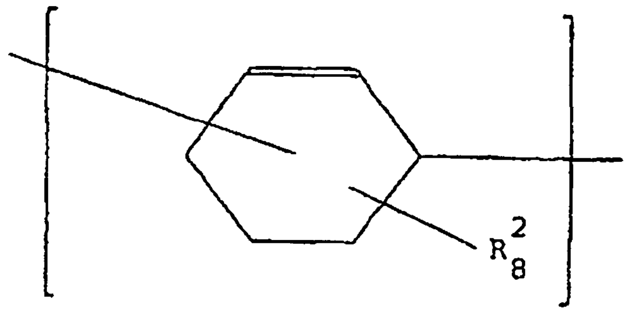

(V)

dans laquelle chaque $R^2$ est tel que défini pour la formule (IV) sous réserve que $R^2$ à la formule (V) exclut un groupe époxy, un groupe hydroxyle, un groupe carboxyle et un groupe acide sulfonique,
C est choisi dans la classe consistant en des motifs de monomère de diène conjugué à chaîne,
D est choisi dans la classe consistant en des motifs de monomère aromatique vinylique, et
F est choisi dans la classe consistant en un motif de monomère d'éthylène et en motifs de monomère d'α-oléfine ; et

dans lequel :

a à d et f satisfont les exigences suivantes :

$$a + b + c + d + f = 100,$$

$$0,001 \leq a \leq 100,$$

$$0 \leq b < 100,$$

$$0 \leq c < 100,$$

$$0 \leq d < 100,$$

et

$$0 \leq f < 100,$$

sous réserve que le motif A de monomère représente de 0,1 à 100 % en mole du nombre total de moles des motifs A et B de monomères et que, lorsque $0,001 \leq (a + b) < 100$ et $0,001 \leq a < 100$, le polymère est un copolymère séquencé ayant au moins une séquence de polymère contenant au moins un motif de monomère A, dans lequel, dans le copolymère séquencé, des motifs de monomère A sont constitués de motifs de monomère d'oléfine cyclique qui sont identiques ou différents et les motifs de monomère B sont constitués de motifs de monomère de diène conjugué cyclique qui sont identiques ou différents,

le polymère ayant une masse moléculaire moyenne en nombre de 10 000 à 5 000 000, tel que mesuré par chromatographie de perméation de gel en utilisant du 1,2,4-trichlorobenzène comme solvant et en utilisant une courbe d'étalonnage d'un polystyrène étalon.

**2.** Polymère suivant la revendication 1, dans lequel a + b = 100 et 0 < b, et dans lequel les motifs du monomère A sont constitués de motifs de monomère d'oléfine cyclique qui sont identiques ou différents et les motifs du monomère B sont constitués de motifs de monomère de diène conjugué cyclique qui sont identiques ou différents.

**3.** Polymère suivant la revendication 1, dans lequel a = 100, et dans lequel les motifs du monomère A sont constitués

de motifs de monomère d'oléfine cyclique qui sont identiques ou différents.

**4.** Polymère suivant la revendication 1, dans lequel, dans le copolymère séquencé, la séquence de polymère consiste en des motifs du monomère A.

**5.** Polymère suivant la revendication 1, dans lequel, dans le copolymère séquencé, la séquence du polymère contient, en outre, au moins un motif du monomère B.

**6.** Polymère suivant la revendication 1, dans lequel, dans le copolymère séquencé, la séquence de polymère consiste en au moins un motif du monomère A et en au moins un motif du monomère B.

**7.** Polymère suivant l'une quelconque des revendications 1 à 6, dans lequel au moins l'un des motifs A de monomère d'oléfine cyclique est un motif de monomère de cyclohexène lié en ses positions 1 et 4 et/ou en ses positions 1 et 2, ou l'un de ses dérivés, et dans lequel au moins l'un des motifs B du monomère de diène conjugué cyclique est un motif de monomère de 1,3-cyclohexadiène, ou l'un de ses dérivés.

**8.** Procédé de préparation d'un polymère contenant un motif moléculaire cyclique saturé comprenant une chaîne principale représentée par la formule (I) suivante :

$$[ -(A)_a- \; -(B)_b- \; -(C)_c- \; -(D)_d- \; -(F)_f- ] \qquad (I)$$

dans laquelle A à D et F sont des motifs de monomère constituant la chaîne principale, dans laquelle des motifs A à D et F de monomère sont disposés dans n'importe quel ordre et a à d et f sont, respectivement, des pourcentages en poids des motifs A à D et F de monomère par rapport au poids total des motifs A à D et F de monomère ;
dans lequel :

A est choisi dans la classe consistant en des motifs de monomère d'oléfine cyclique, chacun étant représenté par la formule (IV) suivante :

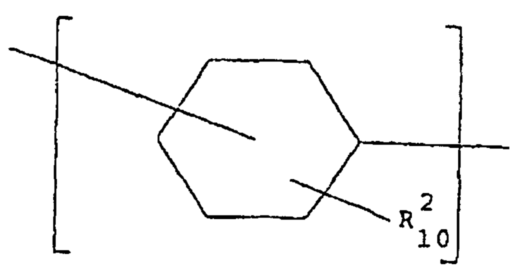

(IV)

dans laquelle chaque $R^2$ représente indépendamment un atome d'hydrogène, un atome d'halogène, un groupe alcoyle ayant de 1 à 20 atomes de carbone, un groupe hydrocarboné aliphatique insaturé ayant de 2 à 20 atomes de carbone, un groupe aryle ayant de 5 à 20 atomes de carbone, un groupe cyclo-alcoyle ayant de 3 à 20 atomes de carbone, un groupe cyclodiényle ayant de 4 à 20 atomes de carbone, un groupe époxy, un groupe hydroxyle, un groupe carboxyle, un groupe acide sulfonique ou un groupe hétérocyclique ayant de 5 à 10 chaînons et ayant au moins un atome d'azote, d'oxygène ou de soufre comme hétéro-atome,
B est choisi dans la classe consistant en des motifs de monomère de diène conjugué cyclique, chacun étant représenté par la formule (V) suivante :

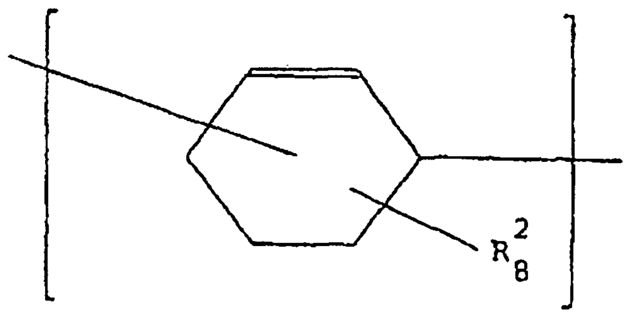 (V)

dans laquelle chaque $R^2$ est tel que défini pour la formule (IV) sous réserve que $R^2$ à la formule (V) exclut un groupe époxy, un groupe hydroxyle, un groupe carboxyle et un groupe acide sulfonique,
C est choisi dans la classe consistant en des motifs de monomère de diène conjugué à chaîne,
D est choisi dans la classe consistant en des motifs de monomère aromatique vinylique, et
F est choisi dans la classe consistant en un motif de monomère d'éthylène et en motifs de monomère d'α-oléfine ; et

dans lequel :

a à d et f satisfont les exigences suivantes :

$$a + b + c + d + f = 100,$$

$$0{,}001 \leq a \leq 100,$$

$$0 \leq b < 100,$$

$$0 \leq c < 100,$$

$$0 \leq d < 100,$$

et

$$0 \leq f < 100,$$

sous réserve que le motif A de monomère représente de 0,1 à 100 % en mole du nombre total de moles des motifs A et B de monomères et que, lorsque $0{,}001 \leq (a + b) < 100$ et $0{,}001 \leq a < 100$, le polymère est un copolymère séquencé ayant au moins une séquence de polymère contenant au moins un motif de monomère A, dans lequel, dans le copolymère séquencé, des motifs de monomère A sont constitués de motifs de monomère d'oléfine cyclique qui sont identiques ou différents et les motifs de monomère B sont constitués de motifs de monomère de diène conjugué cyclique qui sont identiques ou différents,

le polymère ayant une masse moléculaire moyenne en nombre de 10 000 à 5 000 000, tel que mesuré par chromatographie de perméation de gel en utilisant du 1,2,4-trichlorobenzène comme solvant et en utilisant une courbe d'étalonnage d'un polystyrène étalon, qui comprend les stades dans lesquels :

(1) on polymérise au moins un monomère de diène conjugué cyclique ayant de 1 à 6 chaînons ou on copolymérise au moins un monomère de diène conjugué cyclique ayant de 1 à 6 chaînons et au moins un comonomère pouvant être copolymérisé avec lui en la présence d'un catalyseur constitué d'un complexe mononucléaire, binucléaire ou multinucléaire d'un composé organométallique contenant un métal appartenant au groupe IA de la classification périodique des éléments avec un agent de complexation constitué d'une amine, le monomère de diène conjugué cyclique à 6 chaînons étant apte à produire un motif de monomère représenté par la formule (V) et le au moins un comonomère étant choisi dans la classe consistant en des monomères de diène conjugué en chaîne et des monomères aromatiques vinyliques en obtenant ainsi un polymère de diène conjugué cyclique comprenant une chaîne principale représentée par la formule (I') suivante :

$$[-(B')_{b'}-(C)_{c'}-(D)_{d'}] \qquad (I')$$

dans laquelle B', C et D sont des motifs de monomère constituant la chaîne principale de formule (I'), dans laquelle les motifs B' à D de monomère sont disposés dans n'importe quel ordre et b' à d' sont, respectivement, des pourcentages en poids des motifs B' à D de monomère sur la base du poids total des motifs B' à D de monomère,
dans lequel :

B' a la même signification que celle définie pour B de la formule (I) et C et D ont, respectivement, les mêmes significations que celles définies pour la formule (I) ; et

dans lequel :

b' à d' satisfont les exigences suivantes :

$$b' + c' + d' = 100,$$

$$0,001 \le b' \le 100,$$

$$0 \le c' < 100,$$

et

$$0 \le d' < 100,$$

et
dans lequel la copolymérisation du au moins un monomère de diène conjugué et du au moins un comonomère est effectuée pour obtenir un copolymère séquencé ; et
(2) on soumet le polymère de diène conjugué cyclique ou le copolymère séquencé à une réaction d'addition choisie dans le groupe consistant en une hydrogénation, en une halogénation, en une hydrohalogénation, en une sulfonation, en une hydratation, en une halohydratation, en une alcoylation, en une arylation et en une oxydation, la réaction d'addition étant effectuée sur une double liaison carbone à carbone du motif de monomère B' au point que de 0,1 à 100 % en mole, sur la base du nombre de moles du motif du monomère B', du motif du monomère B' sont saturés en transformant ainsi de 0,1 à 100 % en mole du motif du monomère B' en le motif du monomère A.

**9.** Procédé suivant la revendication 8, dans lequel la réaction d'addition au stade (2) est une réaction d'hydrogénation.

**10.** Procédé suivant la revendication 8 ou 9, dans lequel le catalyseur est préparé avant la polymérisation.

FIG.1

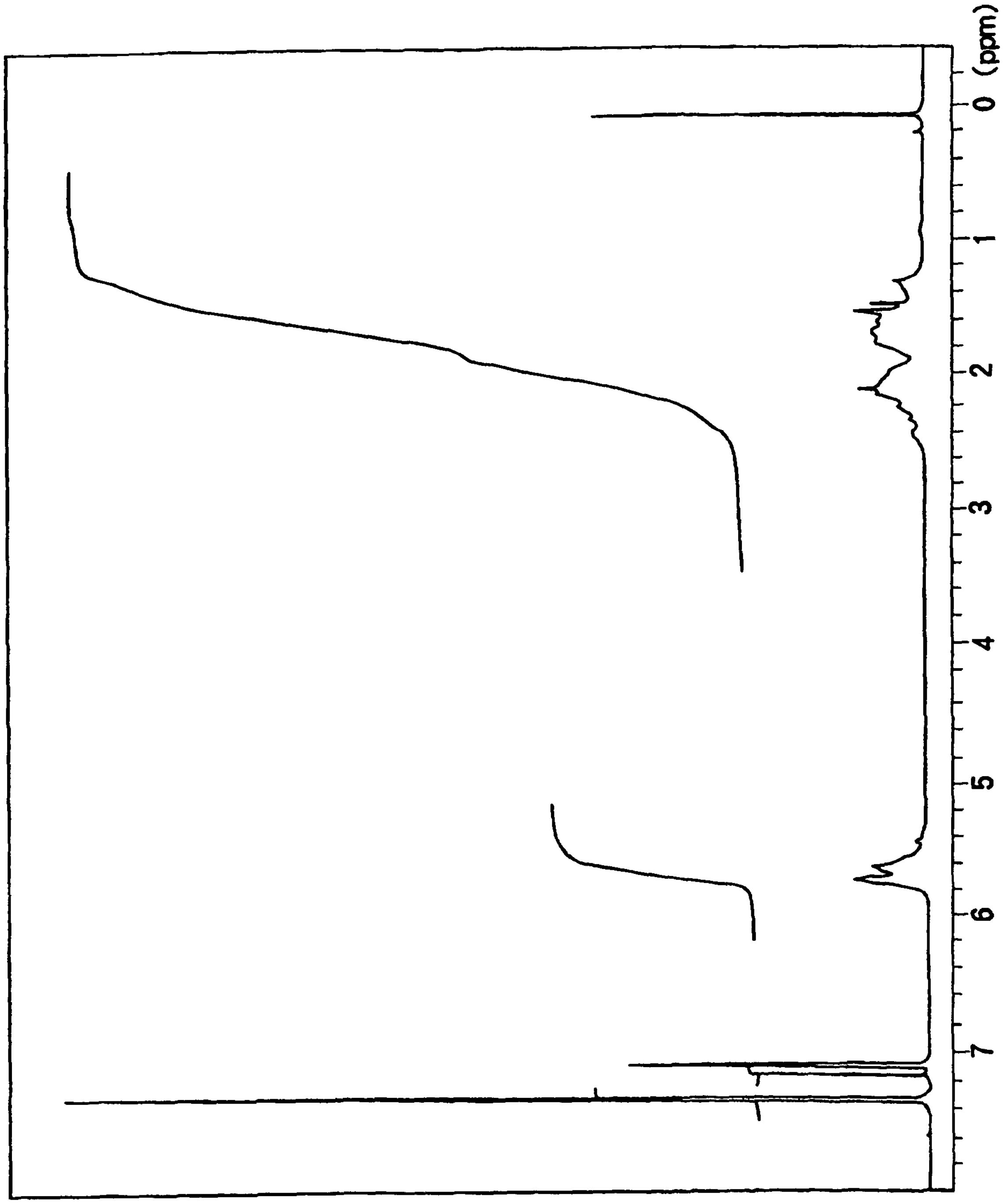

FIG.2

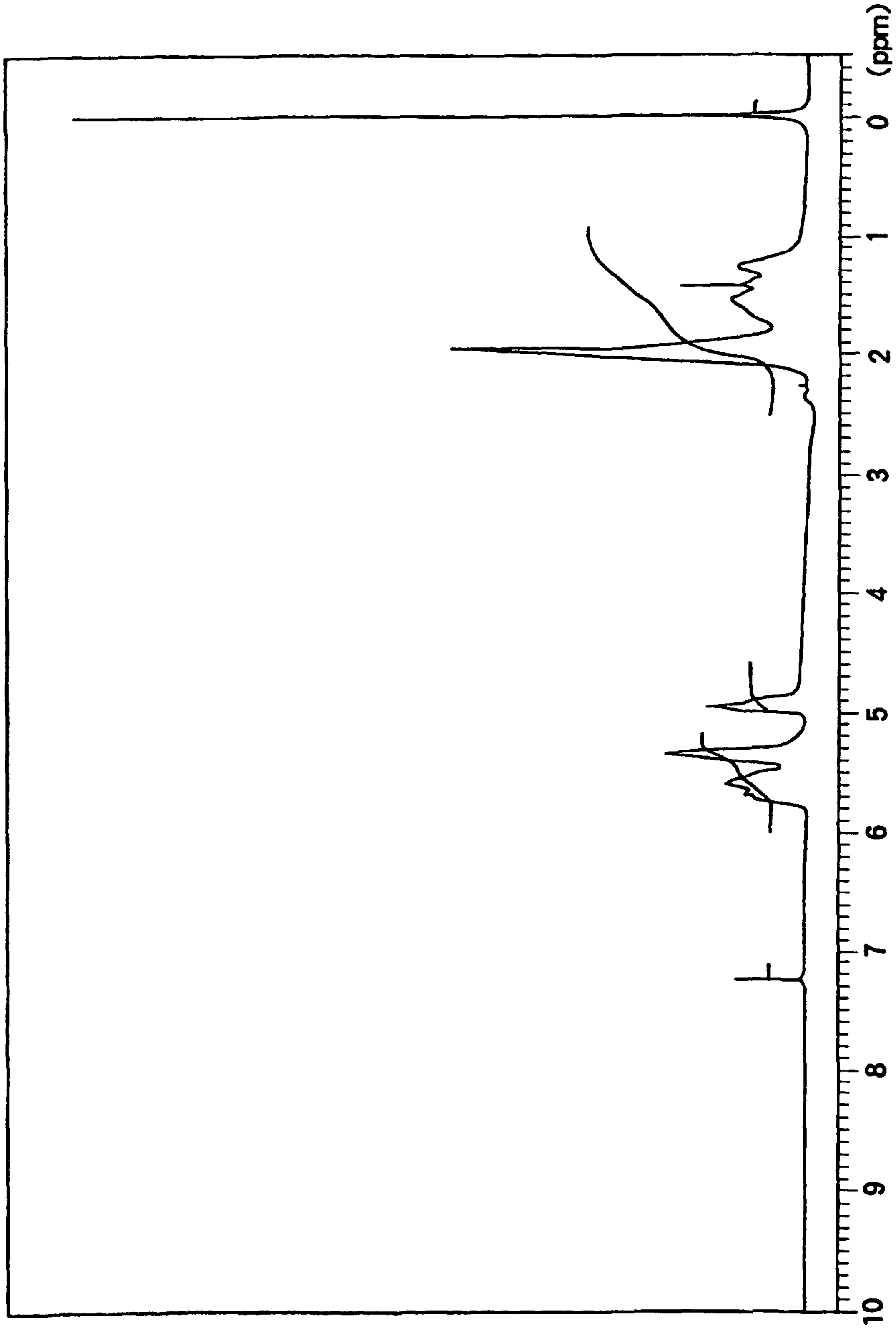

FIG.3

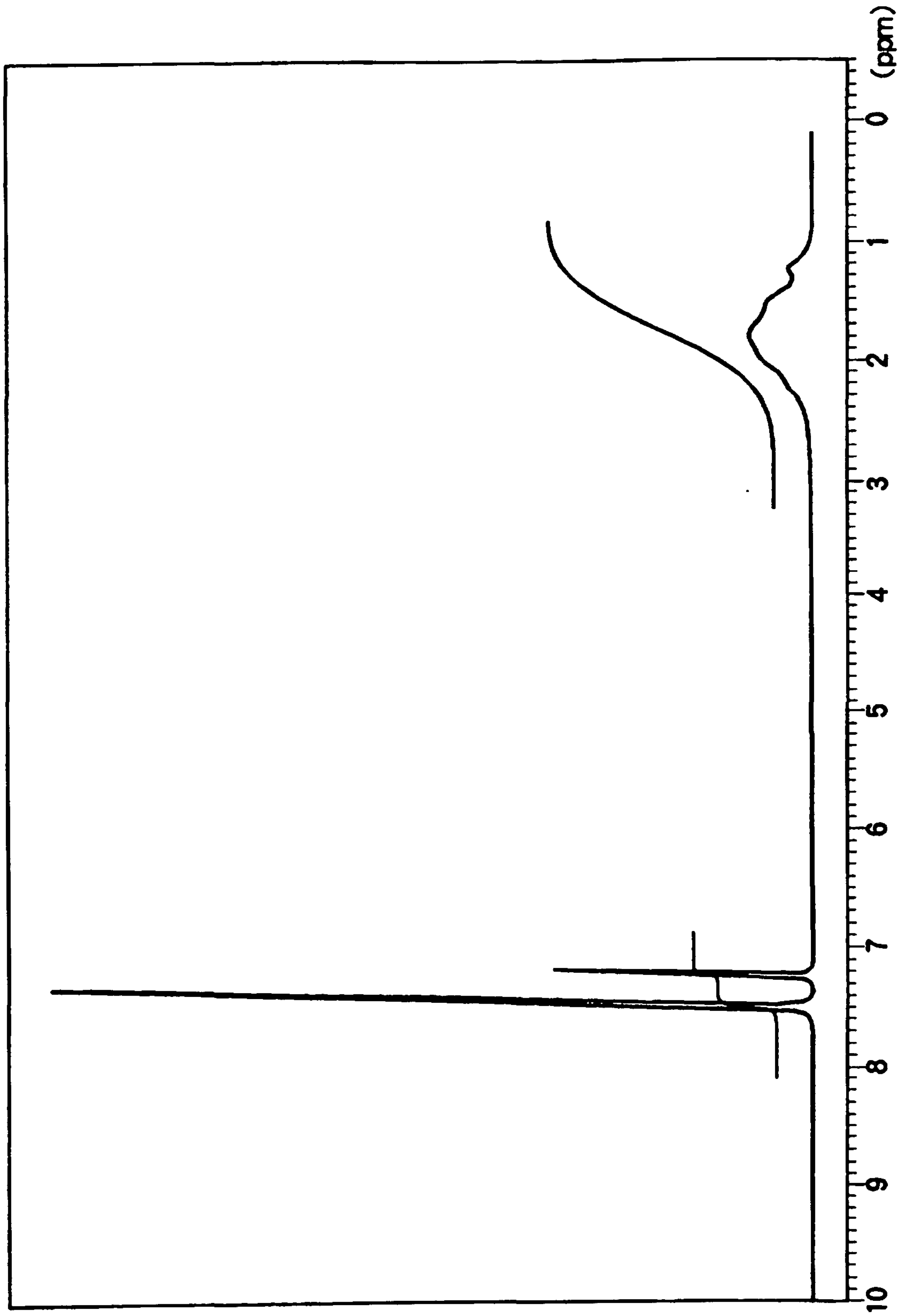

FIG.4